# EUROPEAN PATENT APPLICATION

(11) **EP 4 598 033 A1**
(43) Date of publication of application: **06.08.2025**
(21) Application number: 25154748.5
(22) Date of filing: 29.01.2025
(51) Int. Cl.: H04N 21/431, G11B 27/00, H04N 21/472

(54) **INFORMATION PROCESSING DEVICE, DISPLAY DEVICE, INFORMATION PROCESSING METHOD, AND PROGRAM**

(30) Priority: 31.01.2024 JP 2024012424
(71) Applicant: TDK Corporation, Tokyo 103-6128 (JP)
(72) Inventor: TERAZONO, Yasushi, Tokyo, 103-6128 (JP); KIMURA, Masahiko, Tokyo, 103-6128 (JP)
(74) Representative: Epping - Hermann - Fischer

(57) **Abstract**

The information processing device that outputs a plurality of slow-motion images to a display unit configured to simultaneously display the plurality of slow-motion images in a plurality of slow-motion display areas in parallel includes: a time range assigning unit configured to assign different time ranges to the slow-motion display areas; and a slow-motion data generating unit configured to generate slow-motion data which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning unit.

## Description

### CROSS-REFERENCE TO RELATED APPLICATION

Priority is claimed on Japanese Patent Application No. 2024-012424, filed on January 31, 2024, the content of which is incorporated herein by reference.

### BACKGROUND OF THE INVENTION

### Field of the Invention

The present disclosure relates to an information processing device, a display device, an information processing method, and a program.

### Description of Related Art

For example, when a video including an event which changes quickly with the progress of time is displayed without any modification, displayed details may not be able to be continuously understood in real time with a human visual sense. Therefore, displaying a slow-motion image at a scale factor of a slow motion (a scale factor of a reproduction speed) which is set with respect to a reference video is performed.

For example, in an image processing device described in Patent Document 1, a video of a standard speed and a slow-motion image are simultaneously displayed in parallel in a simultaneous comparison mode (see Patent Document 1).

For example, in an automatic video delay display program described in Patent Document 1, automatically reproducing a slow-motion video with a set delay time and at a set reproduction speed (a scale factor of a slow motion) after capturing the video is performed in order to ascertain a swing form (see Patent Document 2).

### [Patent Documents]

[Patent Document 1] Japanese Unexamined Patent Application, First Publication No. 2009-49471
[Patent Document 2] Japanese Unexamined Patent Application, First Publication No. 2017-225099

### SUMMARY OF THE INVENTION

However, in the related art, when a slow-motion image is reproduced, a delay of a reproduction position with the progress of reproduction may cause a problem.

For example, the time required for understanding an image of a slow motion may increase greatly. For example, when the whole time of a reference video is covered with reproduction of a slow motion at a 1/M scale factor (where M is an integer), the time which is M times a reproduction time of the reference video (a reproduction time at a standard speed) is necessary.

For example, when an image of a slow motion is reproduced, the separation from a reproduction position of a reference video increases with the progress of reproduction, and thus it may be difficult for viewers of the video to understand the video. For example, when reproduction display of a reference video (reproduction display at a standard speed) and reproduction display of an image of a slow motion are simultaneously performed in parallel, the progress of reproduction display on the slow-motion image side is cumulatively delayed with respect to the reproduction display at the standard speed, and the reproduction position at the standard speed will not be able to be kept up with.

With the technique described in Patent Document 1 or the technique described in Patent Document 2, this problem cannot be solved.

For example, in the technique described in Patent Document 2, when images of a slow motion in a new time period are sequentially automatically reproduced and a reproduction speed of the slow motion is set to 1/2 of the standard speed, the images of the slow motion are not reproduced in half of the time (for example, 5 seconds) out of the whole time (for example, 10 seconds). In this way, a time proportion which can be covered with a slow motion may be limited.

The present disclosure was invented in consideration of the aforementioned circumstances, and an objective thereof is to provide an information processing device, a display device, an information processing method, and a program that can shorten a time required to display a slow-motion image with respect to a reference video when the slow-motion image is displayed.

According to an aspect, there is provided an information processing device that outputs a plurality of slow-motion images to a display unit configured to simultaneously display the plurality of slow-motion images in a plurality of slow-motion display areas in parallel, the information processing device including: a time range assigning unit configured to assign different time ranges to the slow-motion display areas; a slow-motion data generating unit configured to generate slow-motion data which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning unit; and a display output unit configured to output the slow-motion images based on the slow-motion data generated by the slow-motion data generating unit to the display unit such that the slow-motion images are displayed in the slow-motion display areas.

According to another aspect, there is provided a display device including the information processing device and the display unit.

According to another aspect, there is provided an information processing method of outputting a plurality of slow-motion images to a display unit configured to simultaneously display the plurality of slow-motion images in a plurality of slow-motion display areas in parallel, the information processing method including: causing a time range assigning unit to assign different time ranges to the slow-motion display areas; causing a slow-motion data generating unit to generate slow-motion data which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning unit; and causing a display output unit to output the slow-motion images based on the slow-motion data generated by the slow-motion data generating unit to the display unit such that the slow-motion images are displayed in the slow-motion display areas.

According to another aspect, there is provided a program causing a computer to realize: the computer outputting a plurality of slow-motion images to a display unit configured to simultaneously display the plurality of slow-motion images in a plurality of slow-motion display areas in parallel, a time range assigning function of assigning different time ranges to the slow-motion display areas; a slow-motion data generating function of generating slow-motion data which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning function; and a display output function of outputting the slow-motion images based on the slow-motion data generated by the slow-motion data generating function to the display unit such that the slow-motion images are displayed in the slow-motion display areas.

With the information processing device, the display device, the information processing method, and the program according to the present disclosure, it is possible to shorten a time required to display a slow-motion image with respect to a reference video when the slow-motion image is displayed.

### BRIEF DESCRIPTION OF THE DRAWINGS

FIG. 1 is a diagram schematically illustrating an example of a configuration of an information processing device, a display device, and an information processing system according to an embodiment.
FIG. 2 is a diagram illustrating an example of a detailed configuration of the information processing device, the display device, and the information processing system according to the embodiment.
FIG. 3A is a diagram illustrating an example of a reference image group and a slow image group according to the embodiment.
FIG. 3B is a diagram illustrating an example of real-time display and slow-time display in parallel according to the embodiment.
FIG. 3C is a diagram illustrating an example of real-time display and slow-time display in parallel at 0.00 sec according to the embodiment.
FIG. 3D is a diagram illustrating an example of real-time display and slow-time display in parallel at 0.75 sec according to the embodiment.
FIG. 3E is a diagram illustrating an example of real-time display and slow-time display in parallel at 1.00 sec according to the embodiment.
FIG. 3F is a diagram illustrating an example of real-time display and slow-time display in parallel at 1.80 sec according to the embodiment.
FIG. 3G is a diagram illustrating an example of real-time display and slow-time display in parallel at 2.00 sec according to the embodiment.
FIG. 3H is a diagram illustrating an example of real-time display and slow-time display in parallel at 2.40 sec according to the embodiment.
FIG. 3I is a diagram illustrating an example of real-time display and slow-time display in parallel at 3.00 sec according to the embodiment.
FIG. 3J is a diagram illustrating an example in which a slow-time display area is reused in real-time display and slow-time display in parallel after 3.00 sec according to the embodiment.
FIG. 4A is a diagram illustrating an example of real-time display and slow-time display in parallel according to a first modified example of the embodiment.
FIG. 4B is a diagram illustrating a specific example of a real-time electrocardiogram image and a slow electrocardiogram image according to the first modified example of the embodiment.
FIG. 4C is a diagram illustrating an example of a time range of slow-time display in parallel according to a comparative example of the first modified example of the embodiment.
FIG. 5A is a diagram illustrating an example of real-time display and slow-time display in parallel at 0.60 sec according to a second modified example of the embodiment.
FIG. 5B is a diagram illustrating an example of real-time display and slow-time display in parallel at 2.60 sec according to the second modified example of the embodiment.
FIG. 6 is a diagram illustrating an example of a time range of real-time display and slow-time display according to a third modified example of the embodiment.
FIG. 7A is a diagram illustrating an example of slow-time display according to a first example of an eighth modified example of the embodiment.
FIG. 7B is a diagram illustrating an example of slow-time display according to a second example of the eighth modified example of the embodiment.
FIG. 7C is a diagram illustrating an example of slow-time display according to a third example of the eighth modified example of the embodiment.
FIG. 7D is a diagram illustrating an example of slow-time display according to a fourth example of the eighth modified example of the embodiment.
FIG. 7E is a diagram illustrating an example of slow-time display according to a fifth example of the eighth modified example of the embodiment.

### DETAILED DESCRIPTION OF THE INVENTION

Hereinafter, an embodiment of the present disclosure will be described with reference to the accompanying drawings.

In the following description, slow-motion may be simply referred to as slow for the purpose of convenience of explanation.

For example, in the following description, a slow-motion image, slow-motion display, slow-motion reproduction, a slow-motion scale factor, a slow-motion display area, and slow-motion data may be referred to as a slow image, slow-time display, slow reproduction, a slow scale factor, a slow-time display area, and slow data, respectively.

### [Schematic configuration of information processing system]

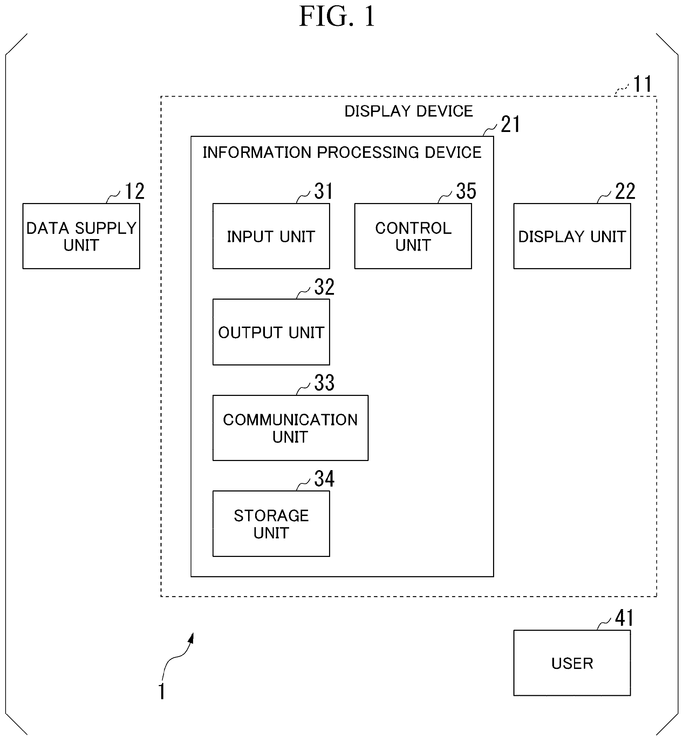

FIG. 1 is a diagram schematically illustrating an example of a configuration of an information processing device 21, a display device 11, and an information processing system 1 according to an embodiment.

In FIG. 1, a user 41 who operates the information processing device 21 is illustrated.

In the present embodiment, the user 41 is not included in the information processing system 1.

Names of devices and systems are names for the purpose of convenience of explanation and are not limited to names in the present embodiment.

Devices mentioned in the present embodiment may be replaced with systems, and systems mentioned in the present embodiment may be replaced with devices.

The information processing system 1 includes a display device 11 and a data supply unit 12.

The display device 11 includes an information processing device 21 and a display unit 22.

The information processing device 21 includes an input unit 31, an output unit 32, a communication unit 33, a storage unit 34, and a control unit 35.

In the preset embodiment, the information processing device 21 and the display unit 22 are illustrated as separate bodies for the purpose of convenience of explanation, but may be configured as a unified body.

When the information processing device 21 and the display unit 22 are configured as a unified body, the display unit 22 may be included, for example, in the output unit 32. In this case, in the example illustrated in FIG. 1, the information processing device 21 is the same as the display device 11.

Names of devices and systems are names for the purpose of convenience of explanation in the present embodiment, and the names may be arbitrary as long as they are substantially equivalent devices or systems.

The information processing device 21 is constituted, for example, using a computer.

The input unit 31 inputs information.

The output unit 32 outputs information.

The communication unit 33 performs information communication with an external device in a wired or wireless manner. In the present embodiment, the input unit 31, the output unit 32, and the communication unit 33 are described to be separate, but, for example, it may be understood that the input unit 31 includes a reception function (a reception unit) of the communication unit 33 and the output unit 32 includes a transmission function (a transmission unit) of the communication unit 33.

The storage unit 34 stores information.

The control unit 35 performs predetermined processing and control.

Here, in the present embodiment, the control unit 35 includes a processor such as a central processing unit (CPU) and performs predetermined processing and control by causing the processor to execute a predetermined program (a control program).

The program may be stored, for example, in the storage unit 34.

In the present embodiment, the data supply unit 12 and the display device 11 are described to be separate, but, for example, a configuration in which the data supply unit 12 is included in the information processing device 21 or a configuration in which the data supply unit 12 is not included in the information processing device 21 but is included in the display unit 22 may be employed. For example, all the constituent units of the information processing system 1 in the example illustrated in FIG. 1 may be configured as a unified system (or may be referred to as a unified device).

### [Detailed example of a configuration of information processing system]

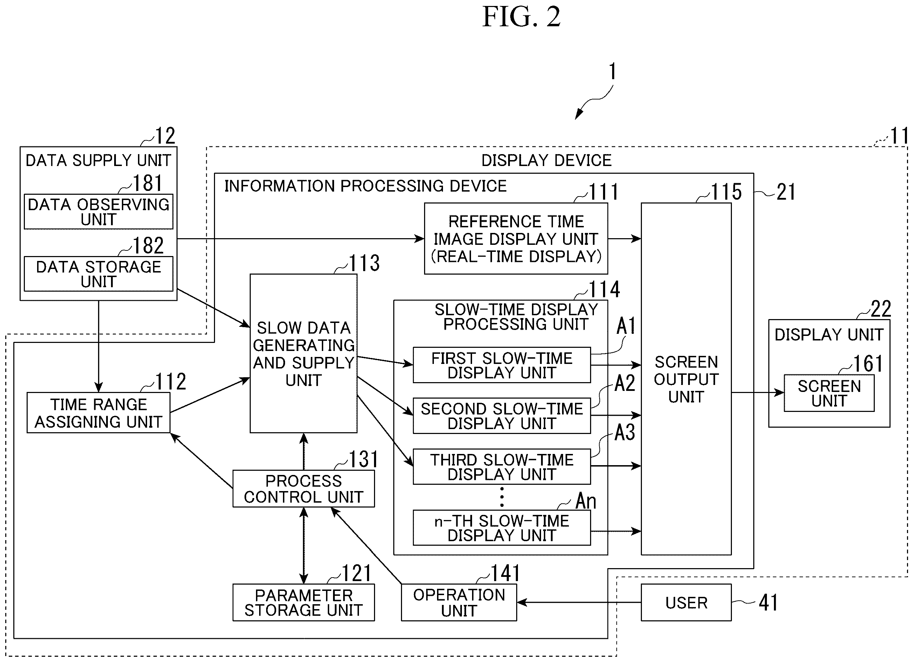

FIG. 2 is a diagram illustrating a detailed example of a configuration of the information processing device 21, the display device 11, and the information processing system 1 according to the embodiment.

### information processing device>

The information processing device 21 includes a reference time image display unit 111, a time range assigning unit 112, a slow data generating and supply unit 113, a slow-time display processing unit 114, a screen output unit 115, a parameter storage unit 121, a process control unit 131, and an operation unit 141.

The operation unit 141 may be, for example, a keyboard or a mouse and is operated by a user 41.

The slow-time display processing unit 114 includes n (where n is an integer equal to or greater than 2) slow-time display units (first to n-th slow-time display units A1 to An).

In the present embodiment, the reference time image display unit 111, the time range assigning unit 112, the slow data generating and supply unit 113, and the slow-time display processing unit 114 are realized by causing the control unit 35 illustrated in FIG. 1 to perform processes corresponding to the constituent units.

In the present embodiment, the process control unit 131 is realized by causing the control unit 35 illustrated in FIG. 1 to perform the corresponding control.

In the present embodiment, the function of the screen output unit 115 is included in the function of the output unit 32 illustrated in FIG. 1.

In the present embodiment, the function of the parameter storage unit 121 is included in the function of the storage unit 34 illustrated in FIG. 1.

In the present embodiment, the function of the operation unit 141 is included in the function of the input unit 31 illustrated in FIG. 1.

Correspondence between the constituent units illustrated in FIG. 2 and the constituents illustrated in FIG. 1 is an example for the purpose of convenience of explanation of the present embodiment and is not limited to the present embodiment.

### <Display unit>

The display unit 22 is constituted, for example, using a display device such as a display screen.

The display unit 22 includes a screen unit 161.

The screen unit 161 includes one or more screens.

Here, when a plurality of images are displayed in the present embodiment, for example, the same number of screens as the plurality of images may be used and the images may be displayed on the respective screens, or a number of screens smaller than the plurality of images may be used, a display area of one or more screens may be divided into two or more, and the images may be displayed in the display areas (the whole display area of a screen or partial display areas into which a screen is divided).

For example, a display area of one screen may be divided into the same number of display areas as the plurality of images (hereinafter referred to as divided display areas for the purpose of convenience of explanation), and the images may be displayed in the divided display areas.

### <Data supply unit>

The data supply unit 12 includes a data observing unit 181 and a data storage unit 182.

The data observing unit 181 observes predetermined data.

The data storage unit 182 stores data of a result observed by the data observing unit 181.

Observation may be referred to as, for example, measurement, measuring, detection, or sensing.

Here, the predetermined data may be arbitrary data, for example, data of a result obtained by observing information on a living body such as a human being using a sensor or data of a result obtained by observing information on an object other than a living body using a sensor.

For example, the sensor may be a camera. In this case, the predetermined data is image data.

For example, the sensor may be a heart-beat sensor, a magnetic sensor, a sound sensor, or an optical sensor. For example, the predetermined data may be electrocardiogram data or magnetocardiogram (cardiac magnetic field) data.

For example, the data supply unit 12 may supply data of an observation result in real time or may temporarily store data of an observation result and then supply the data in non-real time.

The data supply unit 12 may be provided in, for example, a server device that can communicate with the information processing device 21.

### <Operation outline in information processing system>

An operation outline in the information processing system 1 will be described below. An operation outline will be described herein, but the information processing system 1 is not limited to the operations mentioned herein and may further perform other operations.

The data supply unit 12 outputs the observation data to the reference time image display unit 111, the time range assigning unit 112, and the slow data generating and supply unit 113.

The reference time image display unit 111 generates display image data based on the data supplied from the data supply unit 12 and outputs the generated display image data to the screen output unit 115.

Here, the image data may be, for example, data of a video of which a value (for example, a pixel value) indicating an image changes with the progress of time. For example, the image may be an image captured by a camera or may be an image indicating a waveform or the like detected by a predetermined sensor.

In the present embodiment, the reference time image display unit 111 is used as a functional unit for displaying a reference image in a reference display area.

In the present embodiment, an image based on data supplied from the data supply unit 12 is used as the reference image, but arbitrary data (an arbitrary image) may be used as such data (the reference image).

The time range assigning unit 112 assigns time ranges to the first to n-th slow-time display units A1 to An on the basis of the data supplied from the data supply unit 12.

All of the n slow-time display units (the first to n-th slow-time display units A1 to An) may not be normally used and, for example, only one or more slow-time display units may be used. That is, the time range assigning unit 112 can assign time ranges to a necessary number of slow-time display units every time.

In the present embodiment, each slow-time display unit is used as a functional unit for displaying a slow image in the corresponding slow-time display area.

Each time range includes, for example, a starting point and an ending point. A time range including a starting point but not including an ending point may be used according to necessity.

The slow data generating and supply unit 113 generates slow data on the basis of an assignment result of time ranges from the time range assigning unit 112 and the data supplied from the data supply unit 12 and supplies the generated slow data to the first to n-th slow-time display units A1 to An.

In the present embodiment, the slow data is slow-motion data based on the data supplied from the data supply unit 12 and is, for example, data corresponding to a time range assigned to each slow-time display unit (that is, a part of the data supplied from the data supply unit 12).

The slow data generating and supply unit 113 can generate and supply slow data to a necessary number of slow-time display units every time.

Each of the first to n-th slow-time display units A1 to An generates display image data for a slow motion based on the slow data supplied from the slow data generating and supply unit 113 and outputs the generated image data to the screen output unit 115.

Here, the image data may be, for example, data of a video of which a value (for example, a pixel value) indicating a slow-motion image changes with the progress of time.

Every time, the necessary number of slow-time display units (one or more of the first to n-th slow-time display units A1 to An) can perform processing.

For example, there may be a period in which none of the slow-time display units (the first to n-th slow-time display units A1 to An) operate.

The screen output unit 115 may output the display image data input from the reference time image display unit 111 to the display unit 22 such that the display image data is displayed in a predetermined display area (a reference display area) of the screen unit 161 of the display unit 22.

The screen output unit 115 outputs display image data for a slow motion input from each of the first to n-th slow-time display units A1 to An to the display unit 22 such that the display image data is displayed in predetermined display areas (the slow-time display areas) of the screen unit 161 of the display unit 22.

The screen unit 161 of the display unit 22 displays the display image data from the reference time image display unit 111 input from the screen output unit 115 in the reference display area and displays the display slow-motion image data from the slow-time display units input from the screen output unit 115 in the corresponding slow-time display areas.

In the present embodiment, display image data from the reference time image display unit 111 is image data which is displayed in real time, but, for example, image data which is displayed in non-real time may be used.

In the present embodiment, the display slow-motion image data from the slow-time display units is slow-motion image data with respect to the display image data from the reference time image display unit 111.

The display image data from the reference time image display unit 111 and the display slow-motion image data from the slow-time display units can be generated and displayed at necessary timings, and there may be a period in which the image data is not generated and displayed.

The operation unit 141 receives an operation performed by a user 41 and outputs details of the operation to the process control unit 131.

The operation by the user 41 can be performed at necessary timings and may not be necessarily performed.

The parameter storage unit 121 stores various parameters which are used in various types of processes in the present embodiment.

Such parameters can be used at timings required for the processes and may not be necessarily used.

Such parameters may be set, for example, in advance or may be newly set or changed at an arbitrary timing.

The process control unit 131 controls, for example, the processes performed by the time range assigning unit 112 and the processes performed by the slow data generating and supply unit 113. The process control unit 131 may control other processes.

The process control unit 131 performs processes based on the operation details input from the operation unit 141.

The process control unit 131 reads parameters stored in the parameter storage unit 121 according to necessity and supplies the read parameters to the constituent units (for example, one or both of the time range assigning unit 112 and the slow data generating and supply unit 113) requiring the parameters.

The process control unit 131 may perform, for example, a process of setting new parameters in the parameter storage unit 121 or a process of changing the parameters stored in the parameter storage unit 121 on the basis of the operation details or the like from the user 41.

Here, as another configuration example of the slow data generating and supply unit 113 illustrated in FIG. 2, the function of the slow data generating and supply unit 113 may be provided in each of the first to n-th slow-time display units A1 to An.

In this case, for example, the slow data generating and supply unit 113 is not provided, and the data from the data supply unit 12 and the assignment result of the time ranges to the slow-time display units by the time range assigning unit 112 are input to the corresponding slow-time display units. The process control unit 131 may control the slow-time display units.

### [Example of image display]

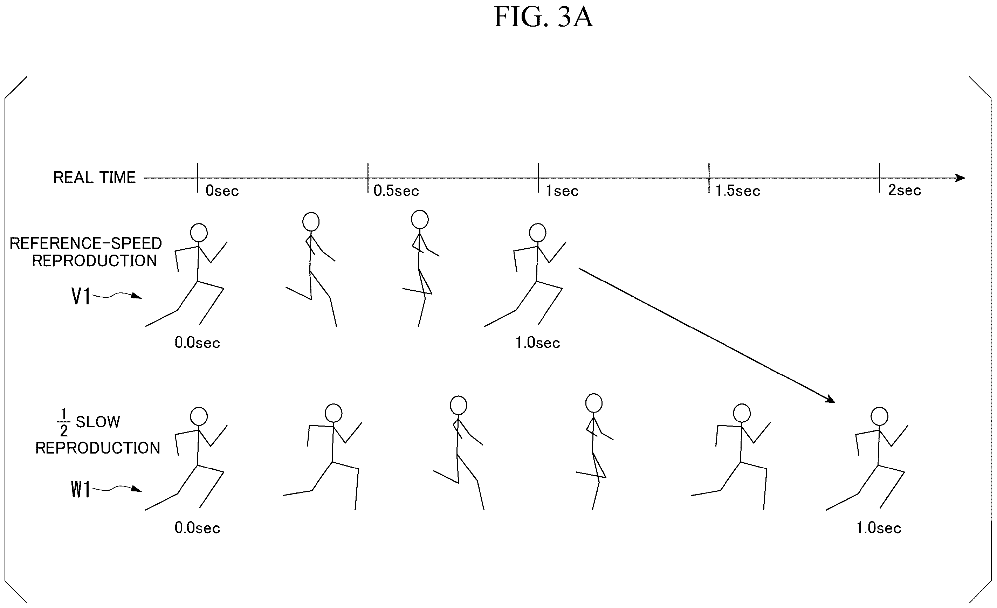

Examples of image display will be described below with reference to FIGS. 3A to 3J.

FIGS. 3A to 3J are schematic diagrams for explanation, but are not strict diagrams.

In these examples, image data in which a scene in which a person takes part in the marathon is imaged is observed by the data observing unit 181.

In these examples, the reference image is an image in real time (a real-time image). A slight time lag with respect to the real time may be actually caused due to image processing or the like, but even when such a time lag is caused, the time lag is ignored and the reference image is considered to be in real time in the present embodiment.

FIG. 3A is a diagram illustrating an example of a reference image group V1 and a slow image group W1 according to the embodiment.

In FIG. 3A, the horizontal axis represents real time (time matching the real time which is actual time in the present embodiment).

In FIG. 3A, the reference image group V1 and the slow image group W1 are illustrated along the horizontal axis.

In this example, the reference image group V1 is a group of images in real time which are reproduced at a standard speed (an original speed which is not slow and not a speed of a scale factor in the present embodiment). In the example illustrated in FIG. 3A, the reference image group V1 when the real time ranges from 0 sec to 1 sec is illustrated.

In this example, the slow image group W1 is a group of images which are slow-reproduced at a display speed of a scale factor (1/2) with respect to the real time. In the example illustrated in FIG. 3A, the slow image group W1 when the real time ranges from 0 sec to 2 sec is illustrated.

In this example, the slow image group W1 progresses at a speed which is (1/2) times that of the reference image group V1, and, for example, the reference image group V1 in 1 second is displayed in 2 seconds.

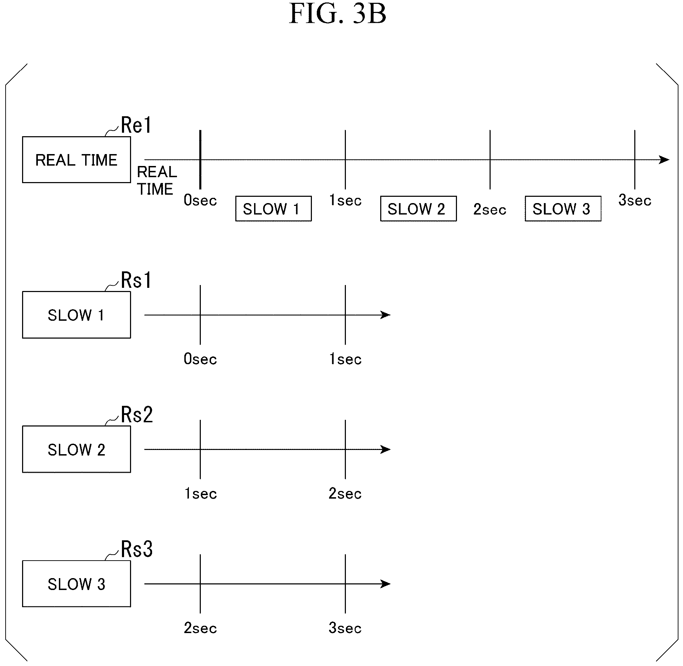

FIG. 3B is a diagram illustrating an example of real-time display and parallel slow-time display according to the embodiment.

In the example illustrated in FIG. 3B, three parallel slow images are displayed at a speed of a scale factor (1/3).

In FIG. 3B, a real-time display area Re1, a first slow-time display area Rs1, a second slow-time display area Rs2, and a third slow-time display area Rs3 are illustrated.

In FIG. 3B, real time is illustrated on the horizontal axis to correspond to the real-time display area Re1.

In FIG. 3B, real time ranges in which slow images are to be displayed are illustrated on the horizontal axis to correspond to the slow-time display areas (the first to third slow-time display areas Rs1 to Rs3).

In the present embodiment, the real-time display area Re1 is an example of a reference display area.

Display of a plurality of images in parallel may be referred to as, for example, parallel display.

The reference time image display unit 111 displays a real-time image (an example of the reference image) in the real-time display area Re1 via the screen output unit 115.

The first slow-time display unit A1 displays a first slow image in the first slow-time display area Rs1 via the screen output unit 115.

The second slow-time display unit A2 displays a second slow image in the second slow-time display area Rs2 via the screen output unit 115.

The third slow-time display unit A3 displays a third slow image in the third slow-time display area Rs3 via the screen output unit 115.

Here, the slow-time display units (the first to third slow-time display units A1 to A3 in this example) display slow images in which a time period covering the real time is delayed.

In this example, the first slow image is a slow image corresponding to the reference image of from 0 sec to 1 sec, the second slow image is a slow image corresponding to the reference image of from 1 sec to 2 sec, and the third slow image is a slow image corresponding to the reference image of from 2 sec to 3 sec.

In this case, the first to third slow-time display units A1 to A3 display slow images in different time periods in the real time, and these display units substantially cover the whole predetermined period (a period of 1 sec in this example) in the real time.

### <Example of temporal change of image display>

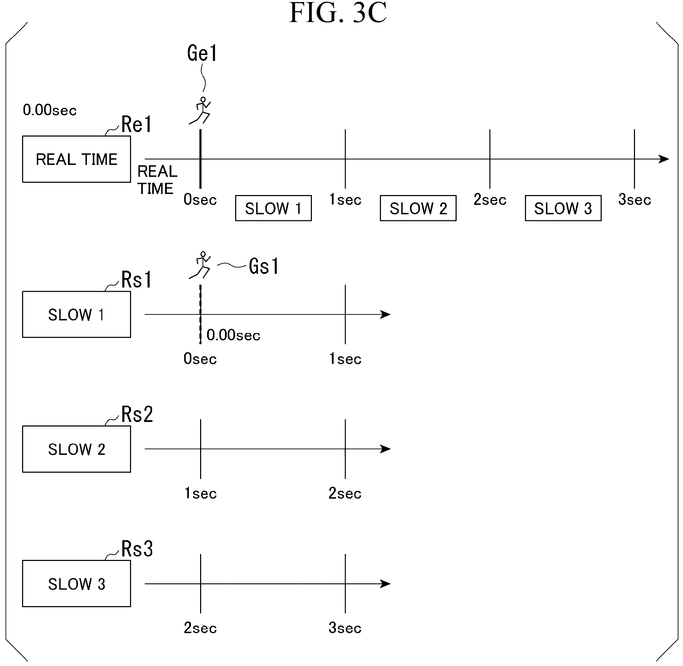

Examples of a temporal change of image display will be described below with reference to FIGS. 3C to 3I.

In FIGS. 3C to 3I, three parallel slow images are displayed at a speed of a scale factor (1/3).

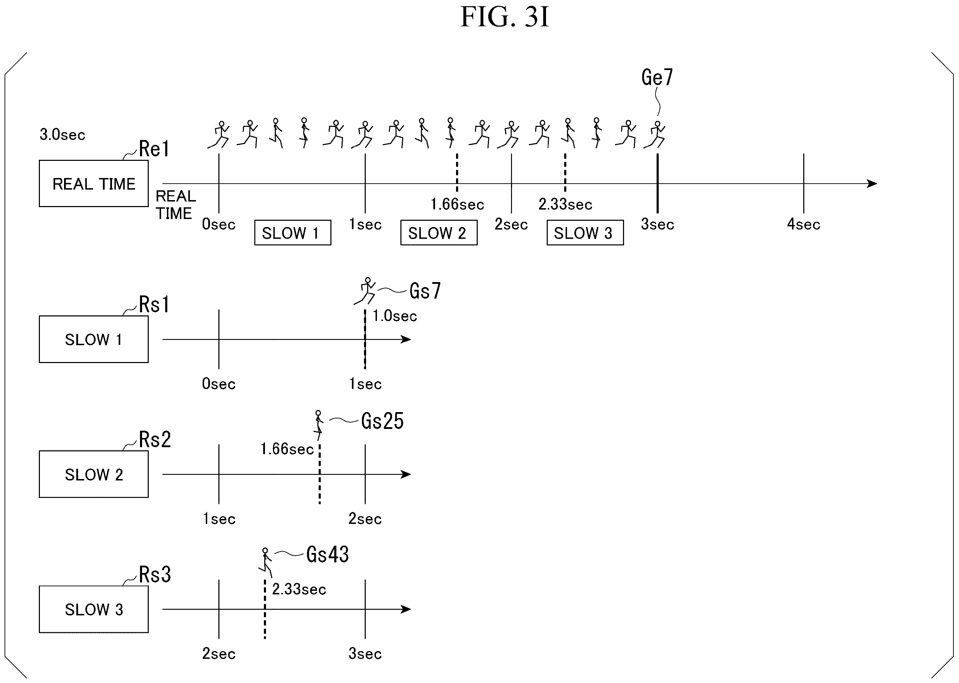

In FIGS. 3C and 3I, a real-time display area Re1, a first slow-time display area Rs1, a second slow-time display area Rs2, and a third slow-time display area Rs3 are illustrated. In FIGS. 3C to 3I, real time is illustrated on the horizontal axis to correspond to the real-time display area Re1.

In FIGS. 3C to 3I, real time ranges in which slow images are to be displayed and time ranges (times represented using real time) of images which are slow-displayed are illustrated on the horizontal axis to correspond to the slow-time display areas (the first to third slow-time display areas Rs1 to Rs3).

For the purpose of convenience of explanation, a description may be made using an approximate value (that is, an approximate value not divisible by 3) instead of an exact solution as a numerical value of a result of a scale factor (1/3).

FIG. 3C is a diagram illustrating an example of real-time display and slow-time display in parallel at 0.00 sec according to the embodiment.

A real-time image Ge1 when the real time is 0.00 sec is displayed in the real-time display area Re1.

A corresponding slow image Gs1 when the real time is 0.00 (=0.00/3) sec is displayed in the first slow-time display area Rs1.

For example, none is displayed in the second slow-time display area Rs2 and the third slow-time display area Rs3.

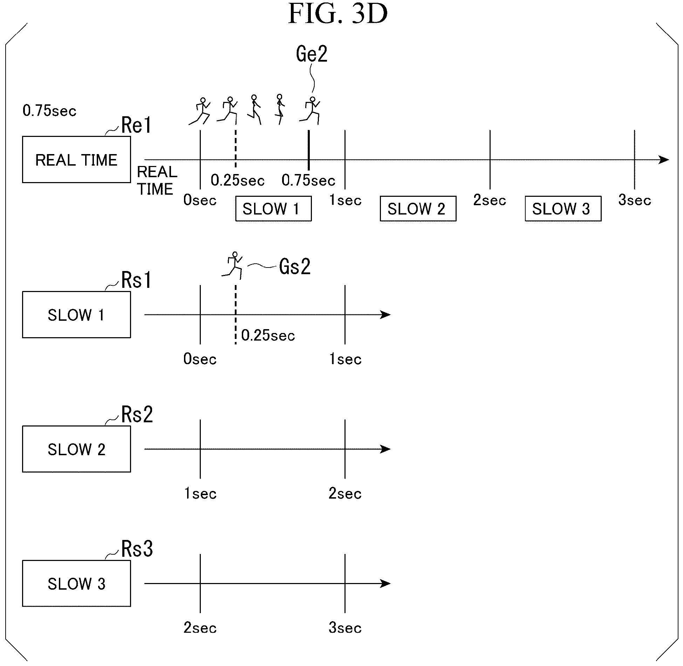

FIG. 3D is a diagram illustrating an example of real-time display and slow-time display in parallel at 0.75 sec according to the embodiment.

A real-time image Ge2 when the real time is 0.75 sec is displayed in the real-time display area Re1.

A corresponding slow image Gs2 when the real time is 0.25 (=0.75/3) sec is displayed in the first slow-time display area Rs1.

For example, none is displayed in the second slow-time display area Rs2 and the third slow-time display area Rs3.

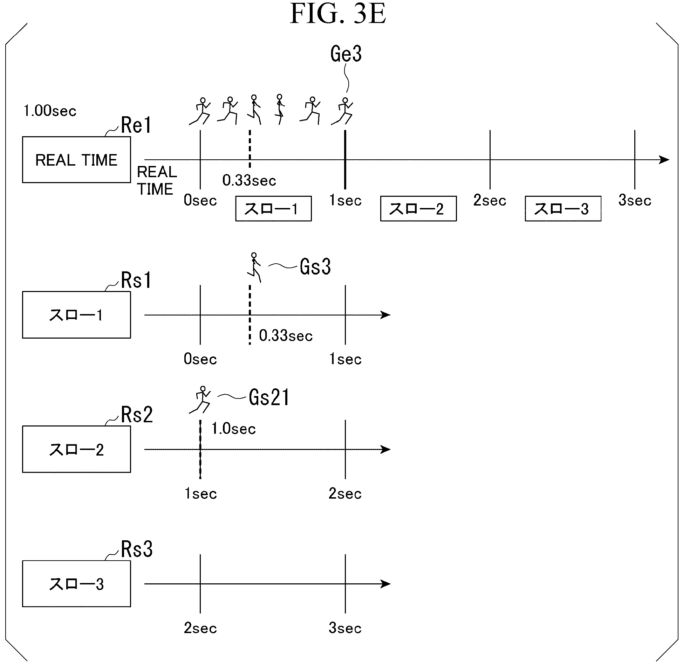

FIG. 3E is a diagram illustrating an example of real-time display and slow-time display in parallel at 1.00 sec according to the embodiment.

A real-time image Ge3 when the real time is 1.00 sec is displayed in the real-time display area Re1.

A corresponding slow image Gs3 when the real time is 0.33 (=1.00/3) sec is displayed in the first slow-time display area Rs1.

A corresponding slow image Gs21 when the real time is 1.00 (=1.00+0.00/3) sec is displayed in the second slow-time display area Rs2.

For example, none is displayed in the third slow-time display area Rs3.

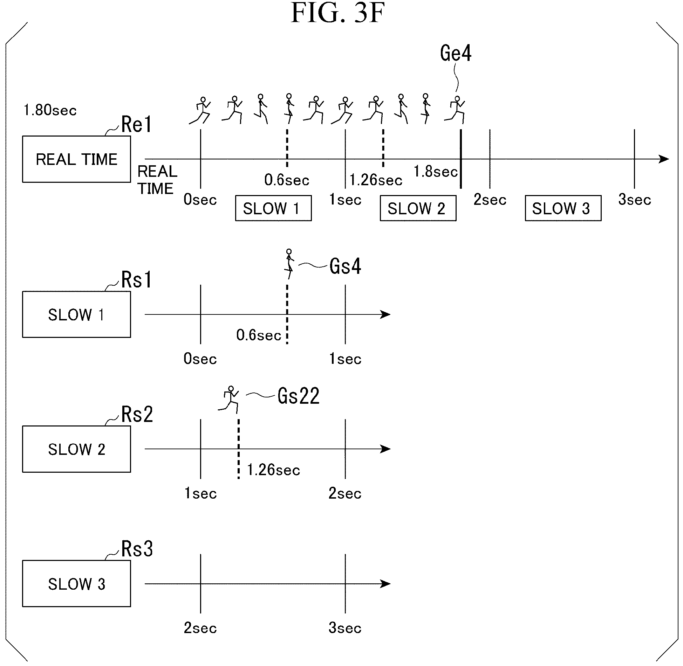

FIG. 3F is a diagram illustrating an example of real-time display and slow-time display in parallel at 1.80 sec according to the embodiment.

A real-time image Ge4 when the real time is 1.80 sec is displayed in the real-time display area Re1.

A corresponding slow image Gs4 when the real time is 0.60 (=1.80/3) sec is displayed in the first slow-time display area Rs1.

A corresponding slow image Gs22 when the real time is 1.26 (=1.00+0.80/3) sec is displayed in the second slow-time display area Rs2.

For example, none is displayed in the third slow-time display area Rs3.

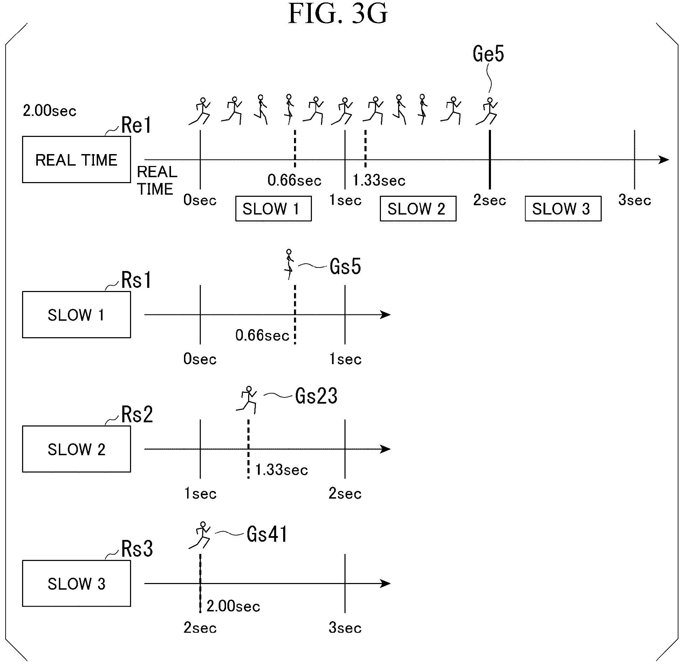

FIG. 3G is a diagram illustrating an example of real-time display and slow-time display in parallel at 2.00 sec according to the embodiment.

A real-time image Ge5 when the real time is 2.00 sec is displayed in the real-time display area Re1.

A corresponding slow image Gs5 when the real time is 0.66 (=2.00/3) sec is displayed in the first slow-time display area Rs1.

A corresponding slow image Gs23 when the real time is 1.33 (=1.00+1.00/3) sec is displayed in the second slow-time display area Rs2.

A corresponding slow image Gs41 when the real time is 2.00 (=2.00+0.00/3) sec is displayed in the third slow-time display area Rs3.

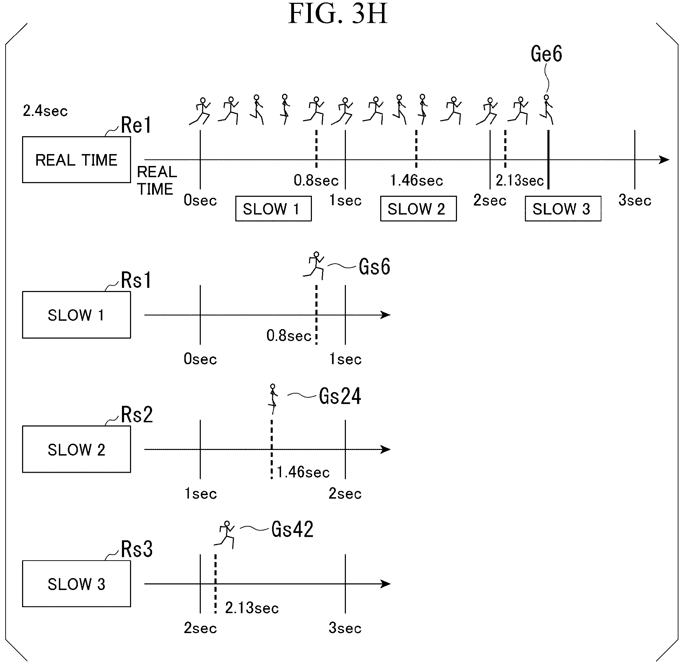

FIG. 3H is a diagram illustrating an example of real-time display and slow-time display in parallel at 2.40 sec according to the embodiment.

A real-time image Ge6 when the real time is 2.40 sec is displayed in the real-time display area Re1.

A corresponding slow image Gs6 when the real time is 0.80 (=2.40/3) sec is displayed in the first slow-time display area Rs1.

A corresponding slow image Gs24 when the real time is 1.46 (=1.00+1.40/3) sec is displayed in the second slow-time display area Rs2.

A corresponding slow image Gs42 when the real time is 2.13 (=2.00+0.40/3) sec is displayed in the third slow-time display area Rs3.

FIG. 3I is a diagram illustrating an example of real-time display and slow-time display in parallel at 3.00 sec according to the embodiment.

A real-time image Ge7 when the real time is 3.00 sec is displayed in the real-time display area Re1.

A corresponding slow image Gs7 when the real time is 1.00 (=3.00/3) sec is displayed in the first slow-time display area Rs1.

A corresponding slow image Gs25 when the real time is 1.66 (=1.00+2.00/3) sec is displayed in the second slow-time display area Rs2.

A corresponding slow image Gs43 when the real time is 2.33 (=2.00+1.00/3) sec is displayed in the third slow-time display area Rs3.

In the example illustrated in FIG. 3I, when the real time arrives at 3.00 sec, display of a slow image corresponding to the reference image of from 0 sec to 1 sec in the first slow-time display area Rs1 ends.

Therefore, the first slow-time display area Rs1 may be reused as a display area of a slow image corresponding to the reference image of which the real time ranges from 3.00 sec to 4.00 sec. Similarly, a process of reusing the second slow-time display area Rs2 as a display area of a slow image corresponding to the reference image of which the real time ranges from 4.00 sec to 5.00 sec and reusing the third slow-time display area Rs3 as a display area of a slow image corresponding to the reference image of which the real time ranges from 5.00 sec to 6.00 sec may be repeated.

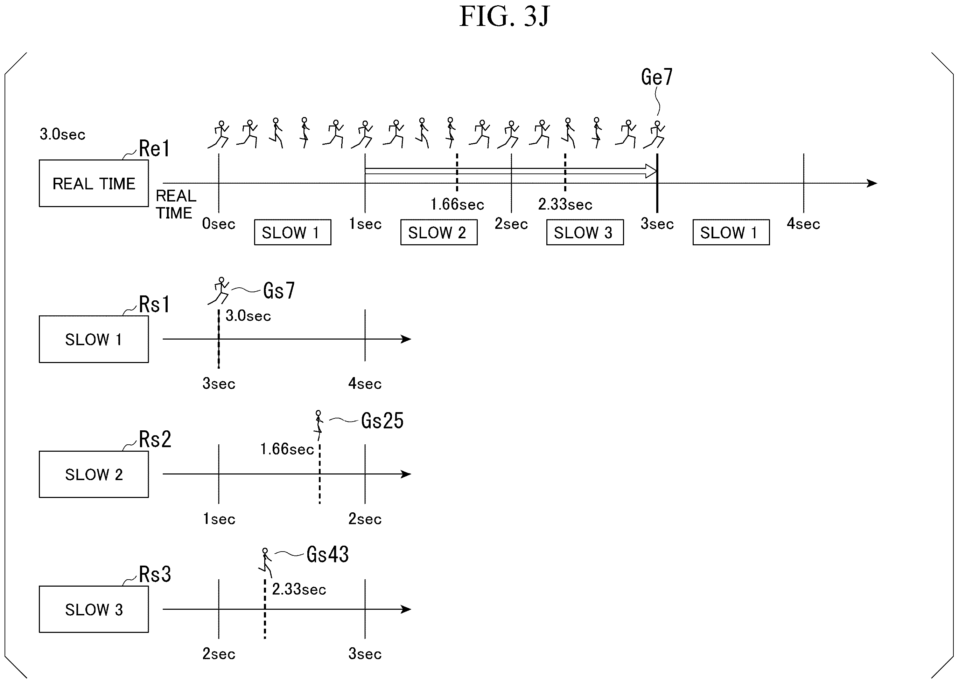

FIG. 3J is a diagram illustrating an example in which a slow-time display area is reused in real-time display and slow-time display in parallel after 3.00 sec according to the embodiment.

In the example illustrated in FIG. 3J, a scene in which the first slow-time display area Rs1 is reused as a display area of a slow image corresponding to the reference image of from 3.00 sec to 4.00 sec immediately after the example illustrated in FIG. 3I (substantially at the same time) is schematically described.

In this way, a next time range may be assigned to each slow-time display area at a time point corresponding to an end of the time range assigned thereto.

For example, a next time range may be assigned to each slow-time display area at a time point which is later than the time point corresponding to an end of the time range assigned thereto.

### [First modified example]

In description of a first modified example, detailed description of the same as in the present embodiment will be omitted, and differences from the present embodiment will be described in detail.

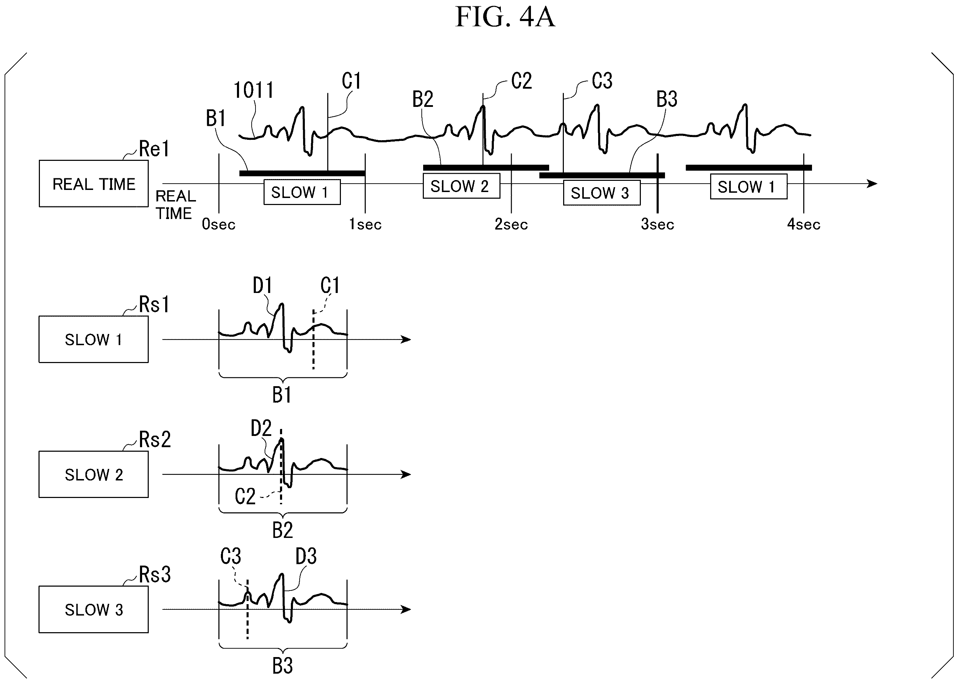

FIG. 4A is a diagram illustrating an example of real-time display and slow-time display in parallel according to the first modified example of the embodiment.

In FIG. 4A, three parallel slow images are displayed at a speed of a scale factor (1/3).

In FIG. 4A, a real-time display area Re1, a first slow-time display area Rs1, a second slow-time display area Rs2, and a third slow-time display area Rs3 are illustrated.

In FIG. 4A, real time is illustrated on the horizontal axis to correspond to the real-time display area Re1.

In FIG. 4A, time ranges in which slow images are to be displayed are illustrated on the horizontal axis to correspond to the slow-time display areas (the first to third slow-time display areas Rs1 to Rs3).

In this example, electrocardiogram data of a person is observed by the data observing unit 181.

A waveform 1011 of electrocardiogram data is illustrated in FIG. 4A.

In the example illustrated in FIG. 4A, a timing of one heartbeat does not have a constant period and changes, and time intervals of an event (one heartbeat in this example) are uneven.

The time range assigning unit 112 determines a time range to which slow-time display is assigned on the basis of a timing of an event.

For example, the time range assigning unit 112 analyzes the waveform 1011 of the electrocardiogram data, detects a featured part, and determines a time range on the basis of the featured part. For example, the time range assigning unit 112 may determine a time range including the featured part at the same timing (or at a timing close) in the time range.

For example, a maximum point (a peak) or a minimum point may be used as the featured part, or a part matching a waveform pattern of a predetermined time length may be used.

In the example illustrated in FIG. 4A, the time range assigning unit 112 determines a time range B1 in which a slow image is to be displayed in a range of from 0.00 sec to 1.00 sec.

In the example illustrated in FIG. 4A, the time range assigning unit 112 determines a time range B2 in which a slow image is to be displayed in a range of from 1.00 sec to 2.00 sec and a range protruding therefrom (a range in which a waveform corresponding to one beat protrudes in this example).

In the example illustrated in FIG. 4A, the time range assigning unit 112 determines a time range B3 in which a slow image is to be displayed in a range of from 2.00 sec to 3.00 sec and a range protruding therefrom (a range in which a waveform corresponding to one beat protrudes in this example)..

In this example, the time ranges B1 to B3 have a time length of 0.80 sec. The time length is an example, and another time length such as 1.00 sec may be used.

In this example, the time ranges B1 to B3 have the same value, but for example, a part or all thereof may have different values.

When the time ranges B1 to B3 are assigned, information based on a waveform part D1 corresponding to the time range B1 is displayed in a time series in the first slow-time display area Rs1, information based on a waveform part D2 corresponding to the time range B2 is displayed in a time series in the second slow-time display area Rs2, and information based on a waveform part D3 corresponding to the time range B3 is displayed in a time series in the third slow-time display area Rs3.

In the example illustrated in FIG. 4A, waveform parts (the waveform parts D1 to D3 in this example) in the time ranges assigned to the slow-time display areas are illustrated, and waveforms (for example, featured parts) included in the time ranges of the slow-time display areas are aligned among the waveform part D1 displayed in the first slow-time display area Rs1, the waveform part D2 displayed in the second slow-time display area Rs2, and the waveform part D3 displayed in the third slow-time display area Rs3.

In FIG. 4A, as an example of timings of slow images (the real-time timings) simultaneously displayed in the slow-time display areas in parallel, an example in which a slow image at a position corresponding to the reference image at time C1, a slow image at a position corresponding to the reference image at time C2, and a slow image at a position corresponding to the reference image at time C3 are simultaneously displayed in the first slow-time display area Rs1, the second slow-time display area Rs2, and the third slow-time display area Rs3, respectively, in parallel is illustrated.

After 3.00 sec, the time range assigning unit 112 assigns the time ranges in the same way and reuses, for example, the slow-time display areas.

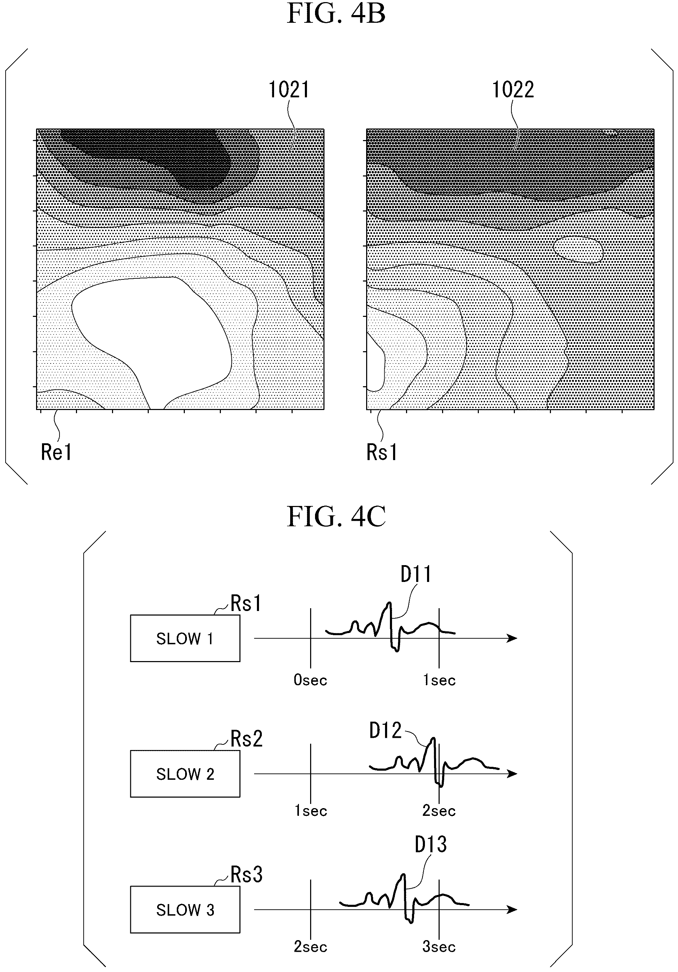

FIG. 4B is a diagram illustrating a specific example of a real-time electrocardiogram image 1021 and a slow electrocardiogram image 1022 according to the first modified example of the embodiment.

In FIG. 4B, specific examples of the real-time electrocardiogram image 1021 and the slow electrocardiogram image 1022 based on electrocardiogram data are illustrated.

In this example, the real-time electrocardiogram image 1021 is displayed in the real-time display area Re1, and the slow electrocardiogram image 1022 (a specific example of the first slow image) is displayed in the first slow-time display area Rs1.

In general, in displaying an image (an electrocardiogram map) based on electrocardiogram data, the image may change too fast to understand, and thus slow-time display may be preferable. In this case, as in the present embodiment, it is effective to simultaneously display slow images in a plurality of different time ranges in parallel.

FIG. 4C is a diagram illustrating an example of a time range of slow-time display in parallel according to a comparative example of the first modified example of the embodiment.

FIG. 4C illustrates an example to which the first modified example is not applied.

In FIG. 4C, three parallel slow images are displayed at a speed of a scale factor (1/3).

In FIG. 4C, a first slow-time display area Rs1, a second slow-time display area Rs2, and a third slow-time display area Rs3 are illustrated.

In FIG. 4C, real time ranges in which slow images are to be displayed and time periods of images which are slow-displayed (time periods expressed using real time) are illustrated on the horizontal axis to correspond to the slow-time display areas (the first to third slow-time display areas Rs1 to Rs3).

As illustrated in FIG. 4C, when the time intervals between the events are uneven and the time ranges are assigned at constant time intervals without assigning the time ranges according to the first modified example, positions of a waveform part D11 corresponding to the waveform part D1 in the example of FIG. 4A, a waveform part D12 corresponding to the waveform part D2 in the example of FIG. 4A, and a waveform part D13 corresponding to the waveform part D3 in the example of FIG. 4A are not aligned in the time ranges of the slow-time display areas.

In the example illustrated in FIG. 4C, the time ranges of the slow-time display areas and relative arrangement positions of the waveform parts D11 to D13 with respect to the time ranges when slow reproduction starts at a time interval of 1 sec are illustrated.

In the example illustrated in FIG. 4C, the first modified example is not included, but the present embodiment is included.

In this example, electrocardiogram data (data of a repetitive waveform) is used as an example of repetitive data, but other data may be used. For example, data of images in which a marathon runner is imaged may be used.

In a specific example, a form of a marathon runner may be assumed to be repetitive, and, for example, a motion of a hand (for example, the right hand or the left hand) of the runner or a motion of a leg (for example, the right leg or the left leg) of the runner may be assumed to be repetitive. In another specific example, a form of a person doing a golf swing or a baseball swing, a form of a person doing baseball pitching, or a form of a swimmer, or the like may be assumed to be repetitive.

In this example, when images based on repetitive data are displayed in a plurality of display areas (the real-time display area Re1 and the first to third slow-time display areas Rs1 to Rs3 in this example), images of repetitive featured parts can be displayed in the display areas.

### [Second modified example]

In description of a second modified example, detailed description of the same as in the present embodiment will be omitted, and differences from the present embodiment will be described in detail.

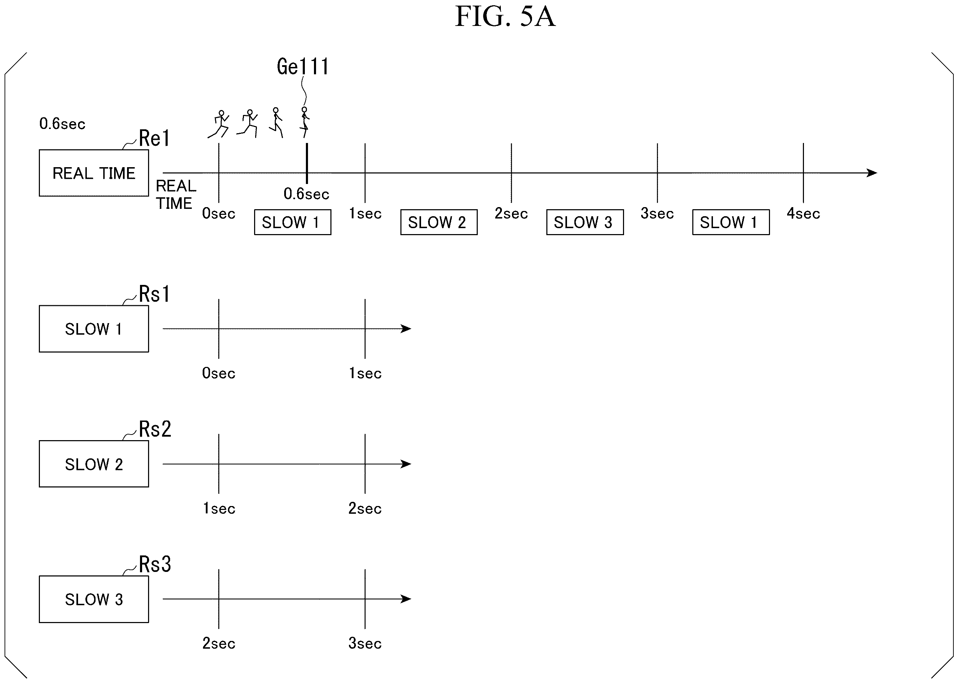

FIG. 5A is a diagram illustrating an example of real-time display and slow-time display in parallel at 0.60 sec according to the second modified example of the embodiment.

In this example, image data in which a scene in which a person takes part in the marathon is imaged is observed by the data observing unit 181.

In FIG. 5A, three parallel slow images are displayed at a speed of a scale factor (1/3).

In FIG. 5A, a real-time display area Re1, a first slow-time display area Rs1, a second slow-time display area Rs2, and a third slow-time display area Rs3 are illustrated.

In FIG. 5A, real time is illustrated on the horizontal axis to correspond to the real-time display area Re1.

In FIG. 5A, real time ranges in which slow images are to be displayed are illustrated on the horizontal axis to correspond to the slow-time display areas (the first to third slow-time display areas Rs1 to Rs3).

In this example, in display of a plurality of slow images in parallel, timings at which display of slow images of corresponding featured parts start are aligned.

In the real-time display area Re1, a real-time image Ge111 when the real time is 0.60 sec is displayed.

In the example illustrated in FIG. 5A, even at 0.60 sec, display of a first slow image in the first slow-time display area Rs1 does not start and is waited for.

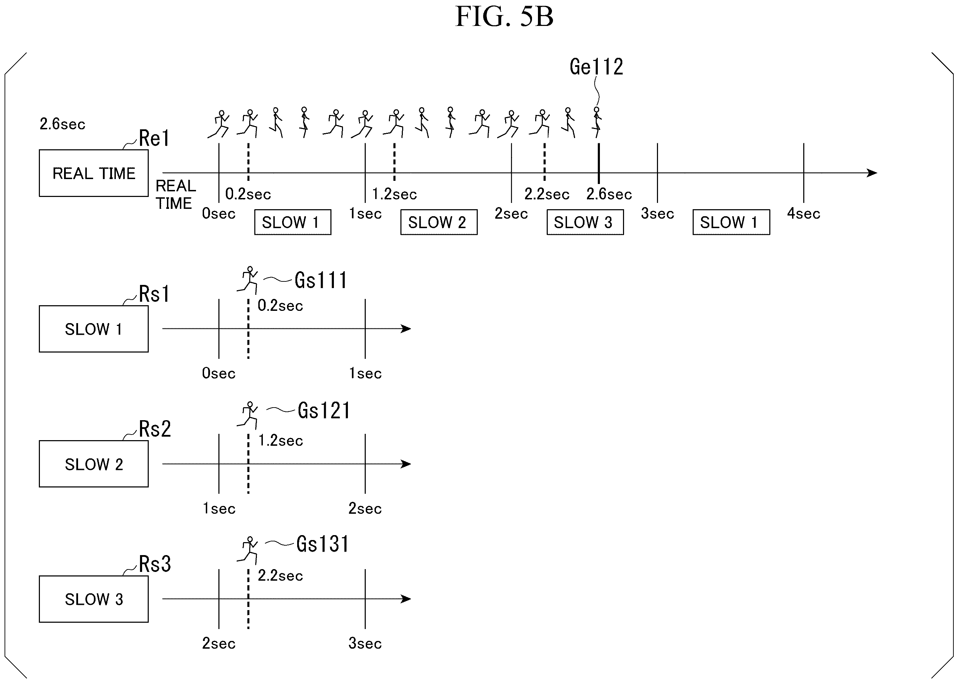

FIG. 5B is a diagram illustrating an example of real-time display and slow-time display in parallel at 2.60 sec according to the second modified example of the embodiment.

In FIG. 5B, the same types of information in a situation at 2.60 sec as illustrated in FIG. 5A are illustrated.

In FIG. 5B, real time ranges in which slow images are to be displayed and time periods of images which are slow-displayed (time periods expressed using real time) are illustrated on the horizontal axis to correspond to the slow-time display areas (the first to third slow-time display areas Rs1 to Rs3).

In the real-time display area Re1, a real-time image Ge112 when the real time is 2.60 sec is displayed.

A corresponding slow image Gs111 when the real time is 0.20 (=0.60/3) sec is displayed in the first slow-time display area Rs1.

A corresponding slow image Gs121 when the real time is 1.20 (=1.00+0.60/3) sec is displayed in the second slow-time display area Rs2.

A corresponding slow image Gs131 when the real time is 2.20 (=2.00+0.60/3) sec is displayed in the third slow-time display area Rs3.

In this example, at a timing (2.00 sec in real time in this example) at which display of a slow image in a final slow-time display area (the third slow-time display area Rs3 in this example) out of the plurality of slow-time display areas starts, display of slow images in all the slow-time display areas (the first to third slow-time display areas Rs1 to Rs3 in this example) starts simultaneously.

In the example illustrated in FIG. 5B, the timing at which a slow image corresponding to the reference image of from 0.00 sec to 1.00 sec is displayed in the first slow-time display area Rs1, the timing at which a slow image corresponding to the reference image of from 1.00 sec to 2.00 sec is displayed in the second slow-time display area Rs2, and the timing at which a slow image corresponding to the reference image of from 2.00 sec to 3.00 sec is displayed in the third slow-time display area Rs3 are aligned.

When slow-time display in the time ranges (time ranges obtained by equally dividing the real time 0.00 sec to 3.00 into three periods in this example) assigned to the slow-time display areas ends, the time range assigning unit 112 updates the time ranges assigned to the slow-time display areas with next time ranges (time ranges obtained by equally dividing the real time 0.00 sec to 6.00 into three periods in this example) and performs slow reproduction in the same way.

That is, in this example, a time range of from 3.00 sec to 4.00 sec is assigned to the first slow-time display area Rs1, a time range of from 4.00 sec to 5.00 sec is assigned to the second slow-time display area Rs2, and a time range of from 5.00 sec to 6.00 sec is assigned to the third slow-time display area Rs3.

In this case, at a timing (5.00 sec in real time in this example) at which display of a slow image in the final slow-time display area (the third slow-time display area Rs3 in this example) out of the plurality of slow-time display areas starts, display of slow images in all the slow-time display areas (the first to third slow-time display areas Rs1 to Rs3 in this example) starts simultaneously.

In this example, a start timing of first simultaneous display of slow images is 2.00 sec, and an end timing thereof is 5.00 sec.

In this example, a start timing of second simultaneous display of slow images is 5.00 sec, and an end timing thereof is 8.00 sec.

The same is true of timings of third or later simultaneous display.

In this way, in this example, since the end timing of simultaneous display of slow images is equal to the start timing of next simultaneous display, it is possible to cyclically perform display.

In this example, the start timing of first slow-time display after 0.00 sec is set to 2.00 sec, but may be, for example, to an arbitrary timing after 2.00 sec.

### <Combination of first modified example and second modified example>

When the second modified example is applied to a case in which the time intervals between the events are uneven and the time ranges of display in the slow-time display areas are set to time ranges based on a featured part of a waveform similarly to the first modified example, for example, waveforms in the time ranges displayed in the slow-time display areas are the same waveform (or similar waveforms), and waveform positions (positions in the time ranges) displayed at the same timing in the slow-time display areas are synchronized. Accordingly, it is possible to simultaneously display slow images with the same waveform (or similar waveforms) in parallel in the plurality of slow-time display areas.

Accordingly, in this example, when images based on repetitive data are displayed in a plurality of display areas (the real-time display area Re1 and the first to third slow-time display areas Rs1 to Rs3 in this example), it is possible to display images of repetitive featured parts in the display areas at the same timing.

In this example, after all the slow-time display areas become a slow-displayable state, display of the slow images in all the slow-time display areas starts simultaneously.

### [Third modified example]

In description of a third modified example, detailed description of the same as in the present embodiment will be omitted, and differences from the present embodiment will be described in detail.

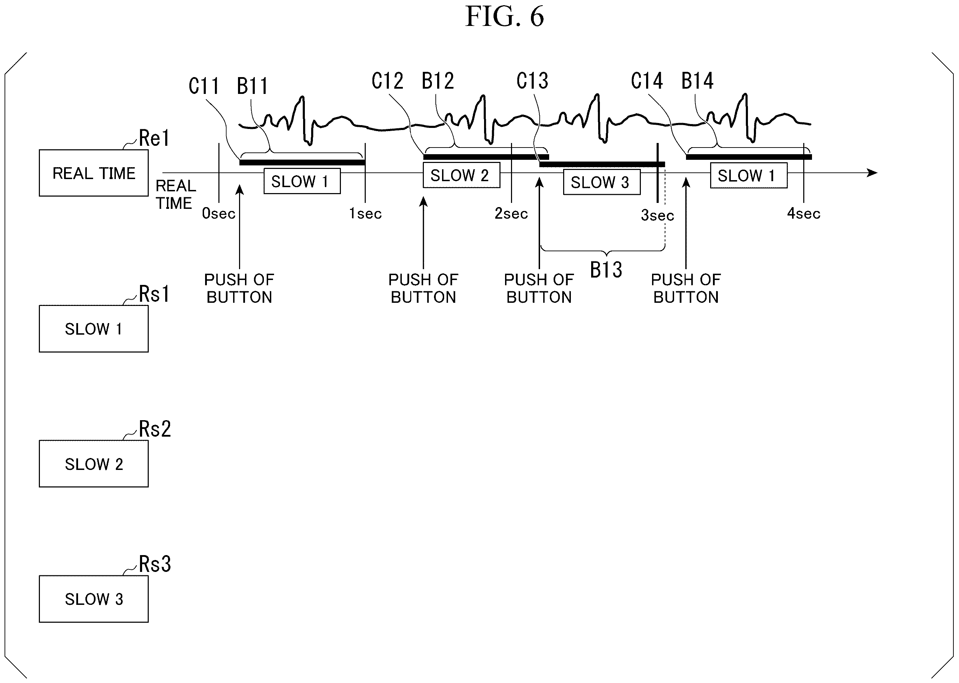

FIG. 6 is a diagram illustrating an example of time ranges of real-time display and slow-time display according to the third modified example of the embodiment.

In FIG. 6, three parallel slow images are displayed at a speed of a scale factor (1/3).

In FIG. 6, a real-time display area Re1, a first slow-time display area Rs1, a second slow-time display area Rs2, and a third slow-time display area Rs3 are illustrated.

In FIG. 6, real time is illustrated on the horizontal axis to correspond to the real-time display area Re1.

In this example, the time range assigning unit 112 sets start timings (real time) of time ranges in which slow reproduction is performed according to a predetermined starting operation (a starting instruction) from the user 41. The predetermined starting operation is not particularly limited and may be, for example, pressing of a predetermined start button.

In the example illustrated in FIG. 6, a start timing of a time range B11 is set by allowing the user 41 to perform the predetermined starting operation at time C11.

A start timing of a time range B12 is set by allowing the user 41 to perform the predetermined starting operation at time C12.

A start timing of a time range B13 is set by allowing the user 41 to perform the predetermined starting operation at time C13.

A start timing of a time range B14 is set by allowing the user 41 to perform the predetermined starting operation at time C14.

In this example, when display of a real-time image (reproduction of the real-time image) in the real-time display area Re1 is being performed and the user 41 performs the predetermined starting operation, slow reproduction starts newly with the timing of the starting operation as a start timing.

The display of a real-time image (reproduction of the real-time image) may be started, for example, in response to an operation by the user 41 or may be started with another trigger.

The end timings of the time ranges B11 to B 14 may be determined using arbitrary techniques, that is, various conditions may be used as ending conditions of the slow reproduction.

For example, time lengths of the time ranges B11 to B14 may be set in advance, and the time ranges B11 to B14 may end when time corresponding to the time lengths elapses after the start timings. For example, the time lengths may be the same time length for all the time ranges B11 to B14 or may be different for the time ranges B11 to B14.

For example, when a start timing at which a next slow image (another slow image) is displayed in one slow-time display area has come after display of a slow image (referred to as a slow image α1 for the purpose of convenience of explanation) in one slow-time display area has started, the display of the slow image α1 may end. In a specific example, when a slow image of a second time range is displayed in the first slow-time display area Rs1 after display of the slow image of the first time range in the first slow-time display area Rs1 has started, that timing may be set as the end timing of the first time range.

For example, the time range assigning unit 112 may set the end timing (real time) of the time range in which slow reproduction is performed in response to a predetermined ending operation (an ending instruction) by the user 41. The predetermined ending operation is not particularly limited and may be, for example, pressing of a predetermined end button.

The ending operation, the ending instruction, and the end button may be referred to as, for example, a stopping operation, a stopping instruction, and a stop button.

Here, a method of changing a slow-time display area whenever the user 41 performs the starting operation is not particularly limited.

For example, a method of first preparing a predetermined display area (for example, a display area of one screen) and dividing the display area into a necessary number of display areas (sub display areas) sequentially whenever a starting operation is performed by the user 41 may be employed. In this case, a maximum number of sub display areas may be determined in advance.

For example, a method of preparing a prescribed number of display areas (sub display areas) by dividing a predetermined display area in advance or the like and sequentially using the prescribed number of display areas (sub display areas) whenever a starting operation is performed by the user 41 may be employed.

In these examples, a used sub display areas may be reused.

For example, the time ranges B11 to B 14 may have a larger time interval than 0 from the previous and subsequent time ranges (that is, may be separated from the previous and subsequent time ranges) or may have an overlap time with the previous and subsequent time ranges.

### [Fourth modified example]

In description of a fourth modified example, detailed description of the same as in the present embodiment will be omitted, and differences from the present embodiment will be described in detail.

In the third modified example, the user 41 instructs a start timing or an end timing of a time range in which slow reproduction is performed while displaying a real-time image. The instruction from the user 41 is performed, for example, through a predetermined operation.

For example, the user 41 may instruct conditions of the starting timing or conditions of the end timing of the time range in which slow reproduction is performed in advance when a real-time image is not displayed. In this case, for example, features of an image observed as the real-time image may be understood in advance by the user 41.

In a specific example, conditions in which slow reproduction of a time range in which a predetermined featured waveform is present in electrocardiogram data is performed or conditions in which slow reproduction of a time range in which a marathon runner is present in a predetermined running section in image data of the marathon runner is performed may be used.

For example, the user 41 may instruct a start timing or an end timing of a time range in which slow reproduction is not performed while displaying a real-time image. In this case, the time range assigning unit 112 assigns time ranges such that slow reproduction of the corresponding time range is not performed in response to an instruction from the user 41.

Here, the end timing of the time range in which slow reproduction is not performed may be determined, for example, using various methods similarly to the third modified example.

For example, the user 41 may instruct a start timing or an end timing of a time range in which slow reproduction is not performed in advance while not displaying a real-time image. In this case, the time range assigning unit 112 assigns time ranges such that slow reproduction of the corresponding time range is not performed in response to an instruction from the user 41.

Here, the end timing of the time range in which slow reproduction is not performed may be determined, for example, using various methods similarly to the third modified example.

In a specific example, settings for not performing slow reproduction of the time range in which a predetermined featured waveform is not present in electrocardiogram data, settings for not performing slow reproduction of the time range in which a marathon runner is not present in a predetermined running section (or a section other than the running section) in image data of the marathon runner, or the like may be used.

### [Fifth modified example]

In description of a fifth modified example, a detailed description of the same as in the present embodiment will be omitted, and differences from the present embodiment will be described in detail.

In the aforementioned description, all of slow scale factors are the same when slow images are displayed in a plurality of slow-time display areas, but the slow scale factors of the slow images which are displayed in some or all of the plurality of slow-time display areas may be different for example.

For example, a slow image of a scale factor (1/2) may be displayed in the first slow-time display area Rs1, and slow images of a scale factor (1/3) may be displayed in the second slow-time display area Rs2 and the third slow-time display area Rs3.

For example, a slow image of a scale factor (1/2) may be displayed in the first slow-time display area Rs1, a slow image of a scale factor (1/3) may be displayed in the second slow-time display area Rs2, and a slow image of a scale factor (1/4) may be displayed in the third slow-time display area Rs3.

Here, the scale factors of the slow motions in the slow-time display areas may be set, for example, in response to an operation by the user 41 or may be automatically set in accordance with a predetermined rule.

### [Sixth modified example]

In description of a sixth modified example, detailed description of the same as in the present embodiment will be omitted, and differences from the present embodiment will be described in detail.

In the aforementioned description, the reference image serving as a reference of slow reproduction is a real-time image, but the reference image may be, for example, an image based on data observed in the past and stored in a predetermined storage unit.

The storage unit may be, for example, the data storage unit 182 of the data supply unit 12, the storage unit 34 of the information processing device 21, or a storage unit such as another database.

In the aforementioned description, the reference image serving as a reference for slow reproduction is an image which is reproduced at a standard speed (a standard image), but the reference image may be, for example, a slow image or a fast image (a fast-forwarding image).

For example, a configuration in which the reference image is a slow image and a plurality of slow images of slow scale factors are displayed in parallel with the reference image (the slow image) may be employed.

For example, a configuration in which the reference image is a fast image and a plurality of slow images of slow scale factors are displayed in parallel with the reference image (the fast image) may be employed.

### [Seventh modified example]

In description of a seventh modified example, detailed description of the same as in the present embodiment will be omitted, and differences from the present embodiment will be described in detail.

The process control unit 131 may select a time range which is actually assigned to slow-time display (or a time range which is not actually assigned to slow-time display) out of the time ranges assigned by the time range assigning unit 112 through a manual operation of the user 41 or automatically.

For example, when a slow image of only one beat out of two beats in an electrocardiogram can be viewed or when a slow image of only an event satisfying predetermined conditions can be viewed, it is possible to select a time range in which slow reproduction is performed.

Here, the event satisfying the predetermined conditions may be, for example, an event satisfying a condition in which the waveform is normal or an event satisfying a condition in which the waveform is abnormal. An example of the case in which the waveform is abnormal is a case in which noise is greater than a predetermined threshold value.

For example, the selection may be performed such that slow-time display is not performed in a time range in which a desired event does not occur out of the assigned time ranges.

In a slow-time display area in which slow-time display is not performed through a manual operation of the user 41 or automatically, for example, nothing may be displayed in the time range in which slow-time display is not performed or the slow-time display area may be used to display a slow image in another time range.

### [Eighth modified example]

In description of an eighth modified example, a detailed description of the same as in the present embodiment will be omitted, and differences from the present embodiment will be described in detail.

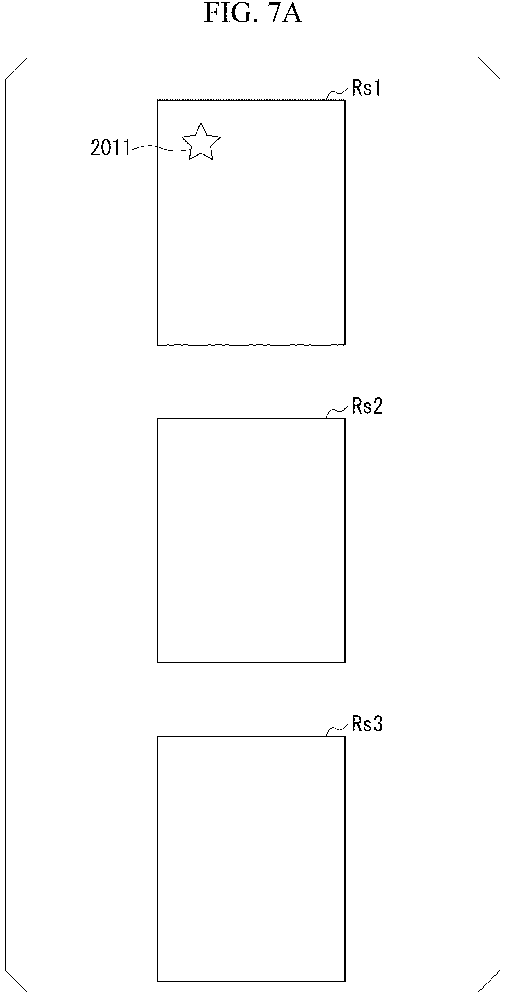

In the eighth modified example, examples of information which may be displayed in slow-time display areas will be described with reference to FIGS. 7A to 7E.

In the examples of FIGS. 7A to 7E, slow images which are displayed in the slow-time display areas are not illustrated. The information according to the eighth modified example displayed in the examples may be, for example, displayed at a position not overlapping the slow image or displayed at a position overlapping the slow image.

FIG. 7A is a diagram illustrating an example of slow-time display according to a first example of the eighth modified example of the embodiment. In FIG. 7A, a first slow-time display area Rs1, a second slow-time display area Rs2, and a third slow-time display area Rs3 are illustrated.

A predetermined mark 2011 is displayed in the first slow-time display area Rs1.

The mark 2011 indicates that the corresponding slow-time display area is a slow-time display area in which a slow image corresponding to the newest real time is displayed out of all the slow-time display areas (three slow-time display areas in this example).

In the example illustrated in FIG. 7A, it is shown that the real time corresponding to the slow image displayed in the first slow-time display area Rs1 is the newest real time.

When the time ranges of the slow images displayed in the slow-time display areas are switched, the slow-time display area in which the mark 2011 is displayed is switched.

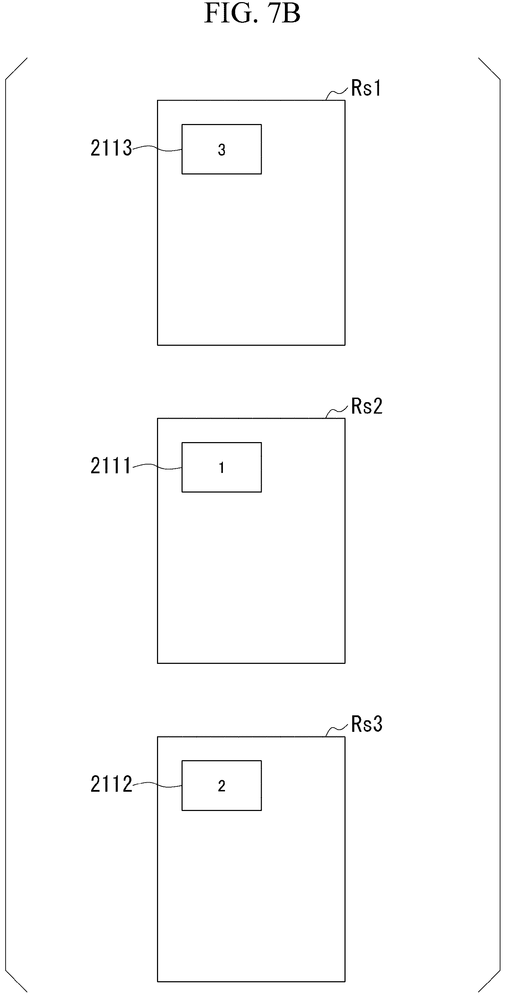

FIG. 7B is a diagram illustrating an example of slow-time display according to a second example of the eighth modified example of the embodiment. In FIG. 7B, a first slow-time display area Rs1, a second slow-time display area Rs2, and a third slow-time display area Rs3 are illustrated.

A mark 2111 indicating the first is displayed in the second slow-time display area Rs2.

A mark 2112 indicating the second is displayed in the third slow-time display area Rs3.

A mark 2113 indicating the third is displayed in the first slow-time display area Rs1.

In the example illustrated in FIG. 7B, it is shown that the second slow-time display area Rs2, the third slow-time display area Rs3, and the first slow-time display area Rs1 are displayed in the order of from the newest time to the oldest time (which are real time) corresponding to the slow images displayed in the three slow-time display areas.

When the time ranges of the slow images displayed in the slow-time display areas are switched, the slow-time display areas in which the marks 2111 to 2113 are displayed are switched.

In this example, information indicating the order of from the newest time to the oldest time (which are real time) is displayed, but, for example, a configuration in which information indicating the order of from the oldest time to the newest time (which are real time) is displayed may be employed.

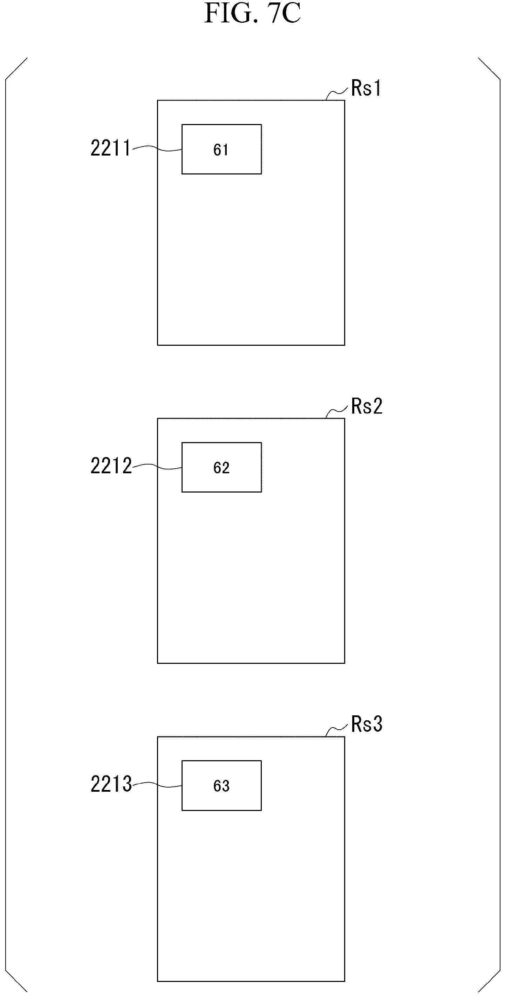

FIG. 7C is a diagram illustrating an example of slow-time display according to a third example of the eighth modified example of the embodiment. In FIG. 7C, a first slow-time display area Rs1, a second slow-time display area Rs2, and a third slow-time display area Rs3 are illustrated.

A mark 2211 indicating the sixty-first is displayed in the first slow-time display area Rs1.

A mark 2212 indicating the sixty-second is displayed in the second slow-time display area Rs2.

A mark 2213 indicating the sixty-third is displayed in the third slow-time display area Rs3.

The numbers indicated by the marks 2211 to 2213 are the total numbers of slow images after slow reproduction has started with respect to the target reference image.

In this example, information indicating the order of from the oldest time to the newest time (which are real time) is displayed, but, for example, a configuration in which information indicating the order of from the newest time to the oldest time (which are real time) is displayed may be employed.

For example, when time ranges in which a slow image is displayed are assigned but a slow image is not displayed in the time ranges through a manual operation of the user 41 or automatically, the number of slow images may be included as one time in the total number of times or may not be included in the total number of times.

When the time ranges of the slow images displayed in the slow-time display areas are switched, the values (numbers) of the marks 2211 to 2213 are switched.

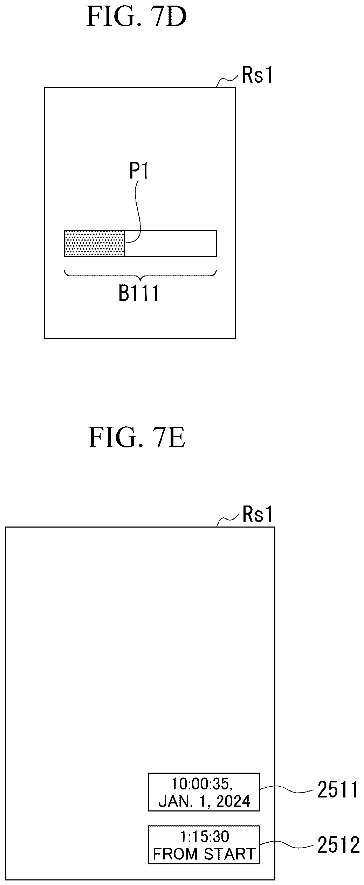

FIG. 7D is a diagram illustrating an example of slow-time display according to a fourth example of the eighth modified example of the embodiment. In FIG. 7D, a first slow-time display area Rs1 is illustrated.

A time range B111 of a slow image displayed in the first slow-time display area Rs1 and a position P1 in the time range B111 at which the slow image is currently displayed are displayed in the first slow-time display area Rs1.

Here, the time range B111 and the position P1 may be displayed at arbitrary positions in the first slow-time display area Rs1 and may be displayed, for example, at any one of upper, lower, right, and left.

The time range B111 may be displayed, for example, as a bar.

The position P1 may be displayed, for example, as a segment or a predetermined figure.

With the progress of time in the slow image displayed in the first slow-time display area Rs1, the position P1 progresses. In a specific example, one end of the bar indicating the time range B111 may be set to 0%, the other end thereof may be set to 100%, and the position P1 may move from the position of 0% to the position of 100% after the initial position of the position P1 has been set to the position of 0%. In this case, when the time range is changed to another time range, the position P1 is initially set to the position of 0% again.

Here, in the example illustrated in FIG. 7D, the first slow-time display area Rs1 is illustrated, and the same is true of the other slow-time display areas (for example, the second slow-time display area Rs2 and the third slow-time display area Rs3).

FIG. 7E is a diagram illustrating an example of slow-time display according to a fifth example of the eighth modified example of the embodiment. In FIG. 7E, a first slow-time display area Rs1 is illustrated.

Time information 2511 and time information 2512 are displayed in the first slow-time display area Rs1.

The time information 2511 indicates an absolute time, for example, a reference time (real time in this example).

The time information 2512 indicates a relative time, for example, an elapsed time from a predetermined reference time. In a specific example, in case of the marathon, the predetermined reference time may be a start timing of the marathon.

Whenever the time of a slow image displayed in the first slow-time display area Rs1 progresses, the time information 2511 and the time information 2512 are updated.

In the example illustrated in FIG. 7E, both the time information 2511 and the time information 2512 are displayed in one slow-time display area (the first slow-time display area Rs1 in this example), but aspect mode in which only one thereof is displayed may be used for example.

In this example, the absolute time is real time, but, for example, when the reference image is a recorded image, the time at which the image has been recorded (or the time at which the image has been captured) may be used as the absolute time.

Here, in the example illustrated in FIG. 7E, the first slow-time display area Rs1 is illustrated, but the same is true of the other slow-time display areas (for example, the second slow-time display area Rs2 and the third slow-time display area Rs3).

### <Regarding aforementioned modified examples>

Out of the functions for realizing various types of modified examples described above, for example, the function according to each modified example may be applied to the information processing system 1, the display device 11, and the information processing device 21, or the functions according to two or more arbitrary modified examples may be combined and applied to the information processing system 1, the display device 11, and the information processing device 21.

### [Regarding aforementioned embodiment]

As described above, in the information processing system 1 according to the present embodiment, when an image of a slow motion in a reference video is displayed, it is possible to shorten the time required to present the image of the slow motion (to simultaneously present a plurality of pieces of slow-motion display in parallel in the present embodiment).

In the information processing system 1 according to the present embodiment, it is possible to curb a delay from the newest time of the reference video to be less than a predetermined value by sequentially starting display of a plurality of slow-motion images. Accordingly, for example, it is possible to curb a delay of slow-motion reproduction from the newest time (the real time in real-time display) to be in a predetermined range and, for example, to perform the slow-motion display while covering all the time ranges.

In the information processing system 1 according to the present embodiment, for example, when it is intended to display the same data as a slow motion in parallel while displaying data in real time, the delay of each slow-motion image extends with the progress of time, but it is possible to curb a delay in real time to be less than a predetermined value and to display slow-motion images in necessary time ranges as a whole by simultaneously displaying a plurality of slow-motion images in parallel.

In this way, for example, it is possible to understand all the time ranges of data through slow-motion display with the progress of real time.

According to the present embodiment, it is possible to achieve effects which are obtained, for example, through only a process of performing slow-motion reproduction separately from real-time reproduction or only a process of performing slow-motion reproduction in only a designated definite time period during real-time reproduction.

For example, according to the present embodiment, by simultaneously displaying a plurality of slow-motion images in parallel, it is possible to easily enable reproducing the slow-motion images at the speed of a slow motion while reproducing a real-time image at a real-time speed, curbing a delay of the slow-motion images from the real-time image to be less than a predetermined value, and continuously observing the images. In this way, according to the present embodiment, it is possible to simultaneously display a plurality of slow-motion images in parallel while maintaining a reproduction speed of real-time display.

In the present embodiment, it is possible to display slow-motion images to cover all the time ranges with the progress of reference time.

In the information processing system 1 according to the present embodiment, for example, when an interval between events included in observed data cannot be controlled, it is possible to align time ranges in which slow motions are to be displayed with the time ranges in which the corresponding events are present by assigning data parts (time ranges) in which a slow motion is to be displayed according to the positions of the events (temporal positions in the present embodiment). In this way, the time ranges may be assigned according to characteristics of the events, and it is possible to more effectively present information.

In this way, in the information processing system 1 according to the present embodiment, for example, display start timings of a plurality of slow-motion images may be adjusted, and, for example, the same events in a plurality of slow-motion images may be able to be synchronized and displayed in parallel.

In the present embodiment, it is possible to select whether to determine display timings of a plurality of slow-motion images which are simultaneously in parallel to be sequential or simultaneous.

For example, in the present embodiment, it is possible to select whether to display slow-motion images of time ranges which are assigned according to a fixed rule regardless of an event or to display slow-motion images of time ranges which are assigned according to a rule based on an event. In this way, according to the present embodiment, even when timings of events included in observed data cannot be adjusted, it is possible to automatically or manually set time ranges aligned with the events.

In the present embodiment, it is possible to easily and effectively compare repetitive events by visually comparing a plurality of slow-motion images which are set to be simultaneous and parallel.

In the information processing system 1 according to the present embodiment, various modes associated with slow-motion display may be set according to an operation which is performed by the user 41. In this way, time ranges may be assigned according to a point of interest of the user 41, and it is possible to more effectively present information.

An example of a configuration according to the present embodiment will be described below.

The display device 11 in the information processing system 1 according to the present embodiment includes the display unit 22 that can simultaneously display a plurality of slow-motion images in parallel in addition to a real-time image which is an image in progressing reference time (which is time serving as a reference and real time in the present embodiment) in association with data progressing in the time direction.

The display unit 22 includes a plurality of display areas. In the present embodiment, the display areas include a real-time display area and a plurality of slow-time display areas.

The display device may be referred to as, for example, an image display device.

The display unit may be referred to as, for example, an image display unit.

The information processing system 1 according to the present embodiment includes the data supply unit 12 that supplies data.

In the present embodiment, the data supply unit 12 supplies data to constituent units (one or more predetermined constituent units) of the information processing device 21 included in the display device 11.

In the information processing device 21, the time range assigning unit 112 assigns different time ranges (time ranges in which the slow-time display areas take charge) to the slow-time display areas such that a delay of the time of the newest slow-motion image (a timing of the corresponding position on the reference time herein) from the reference time (which is time serving as a reference and real time in the present embodiment) is maintained to be equal to or less than a predetermined value and instructs starting of slow reproduction.

In the information processing device 21, the slow data generating and supply unit 113 generates images of slow motions on the basis of the data supplied from the data supply unit 12 and instructions for assigning the time ranges and starting slow reproduction from the time range assigning unit 112 and supplies slow-motion images to the plurality of slow-time display areas.

In the information processing device 21, the screen output unit 115 outputs an image to be displayed on the display unit 22 to the screen of the screen unit 161 of the display unit 22.

Accordingly, in the information processing system 1, the display device 11, and the information processing device 21 according to the present embodiment, by displaying slow images covering different time ranges in parallel, it is possible to cover all the time periods or some desired time periods through slow-time display while following in real time with a predetermined delay without increasing a delay from the real time.

Here, as data progressing in the time direction, for example, data of which a value changes with the original progress of time may be used, or data which does not originally include an element progressing with the progress of time but which is can be replaced with data progressing in the time direction may be used. For example, in data of a plurality of pixels arranged in both a longitudinal direction and a lateral direction, one of the longitudinal direction and the lateral direction may be considered as the time direction, and data of a pixel group arranged in the other direction may be considered as values changing with the progress of time. The number of pixel groups arranged in the other direction is, for example, two or more but may be one pixel.

In the present embodiment, both of an image in the reference time (which is time serving as a reference and real time in the present embodiment) and a plurality of slow images are simultaneously displayed in parallel, but, for example, a mode in which the image in the reference time is not displayed and the plurality of slow images are simultaneously displayed in parallel may be used.

In the present embodiment, the condition in which a delay of the time of the newest slow-motion image (the time of the corresponding position in the reference time herein) from the reference time (which is time serving as a reference and real time in the present embodiment) is maintained to be equal to or less than a predetermined value is used, and time ranges are assigned to the slow-time display areas, but a configuration not using such condition may be used.

In the present embodiment, a real-time image is used as an image of the reference time, but the present disclosure is not limited thereto, and an image of other than the real time (a non-real-time image) may be used. For example, an image based on data stored in advance in the storage unit may be used as the non-real-time image.

In the information processing system 1, the display device 11, and the information processing device 21 according to the present embodiment, the reference time may progress at the same speed as the real time.

Accordingly, in the information processing system 1, the display device 11, and the information processing device 21 according to the present embodiment, it is possible to follow display of real-time reproduction with slow motions in parallel.

Here, the real time is time in a real-time clock.

In the information processing system 1, the display device 11, and the information processing device 21 according to the present embodiment, the reference time may progress at a speed different from that of the real time.

Accordingly, in the information processing system 1, the display device 11, and the information processing device 21 according to the present embodiment, for example, when reproduction is performed after the fact, main reproduction may be performed as slow-motion reproduction instead of real-time reproduction, and the whole other slow reproduction in parallel may be multiplied by a scale factor (a speed scale factor of main slow reproduction). That is, in the information processing system 1, the display device 11, and the information processing device 21 according to the present embodiment, a plurality of pieces of slow reproduction can be displayed in parallel with respect to the slow reproduction.

Here, for example, when an image of the reference time (a reference image) is a recorded image, the reference time is time in the past.

For example, a slow-motion image instead of an image of a scale factor 1 may be used as the reference image, or an image of a scale factor greater than 1 may be used.

In the information processing system 1, the display device 11, and the information processing device 21 according to the present embodiment, data in the reference time is displayed in parallel in a predetermined display area of the display unit 22.

Accordingly, in the information processing system 1, the display device 11, and the information processing device 21 according to the present embodiment, it is also possible to normally understand information in the reference time.

In the information processing system 1, the display device 11, and the information processing device 21 according to the present embodiment, after display corresponding to a time range assigned to one slow-time display area has ended, the time range assigning unit 112 assigns a new time range to the slow-time display area and performs display from the head of the time range.

Accordingly, in the information processing system 1, the display device 11, and the information processing device 21 according to the present embodiment, it is possible to automatically switch a slow reproduction time period in definite display areas to cover other time periods. That is, in the present embodiment, it is possible to reuse (for example, refresh) a slow-time display area.

A slow-time display area may be referred to as, for example, a slow-time display window.

In the information processing system 1, the display device 11, and the information processing device 21 according to the present embodiment, time ranges which are assigned to the slow-time display areas by the time range assigning unit 112 are time ranges of which starting points are determined at predetermined time intervals.

Accordingly, in the information processing system 1, the display device 11, and the information processing device 21 according to the present embodiment, for example, it is possible to cover all the time periods regardless of details of a display target by assigning a time range to a next slow-time display area at the predetermined time intervals (for example, at intervals of 1 second).

In the information processing system 1, the display device 11, and the information processing device 21 according to the present embodiment, the time ranges which are assigned to the slow-time display areas are time ranges which are determined to include a featured timing in a repetitive event as a designated timing.

Accordingly, in the information processing system 1, the display device 11, and the information processing device 21 according to the present embodiment, the time ranges are assigned in synchronization with the event. As a result, it is possible to easily understand the event and to easily compare display details between a plurality of different slow-time display areas.

For example, the time range assigning unit 112 may determine the time ranges after a predetermined peak (for example, an R peak in electrocardiogram) has been detected such that the predetermined peak appears after a predetermined time (for example, 300 ms) has elapsed from starting of slow reproduction.

In the information processing system 1, the display device 11, and the information processing device 21 according to the present embodiment, the time range assigning unit 112 receives a real-time instruction to newly generate a starting point of a time range from the user 41.

Accordingly, in the information processing system 1, the display device 11, and the information processing device 21 according to the present embodiment, the user 41 can start slow reproduction in an empty slow-time display area by performing a predetermined operation of pressing a button or the like.

In the information processing system 1, the display device 11, and the information processing device 21 according to the present embodiment, the time range assigning unit 112 sets an ending point of a time range which is assigned to each slow-time display area to one of a direct instruction (an instruction based on pressing of a predetermined button or the like) from the user 41, a predetermined time length, and a starting point of a time range which is later than the starting point of the time range and which is the earliest different time range.

Accordingly, in the information processing system 1, the display device 11, and the information processing device 21 according to the present embodiment, slow reproduction which has been started according to an instruction from the user 41 can be ended on the basis of an appropriate condition (technique).

Here, in the information processing system 1, the display device 11, and the information processing device 21 according to the present embodiment, for example, a process of allowing the user 41 to manually set a time range and performing slow reproduction may be performed along with a process of automatically setting a time range and performing slow reproduction, and these processes may be simultaneously performed in parallel.

In a specific example, slow images for automatic slow reproduction may be displayed in parallel in an upper part of a predetermined screen, and slow images for manual slow reproduction may be displayed in parallel in a lower part of the screen. The upper parallel number (the number of slow-time display areas) and the lower parallel number (the number of slow-time display areas) are not particularly limited and may be, for example, maximally 3.

For example, an end side (a termination side) of a time range may be infinite, that is, a configuration in which an ending point of the time range is not determined in advance may be used.

In the information processing system 1, the display device 11, and the information processing device 21 according to the present embodiment, the display scale factors of the slow motions are the same.

Accordingly, in the information processing system 1, the display device 11, and the information processing device 21 according to the present embodiment, it is possible to display the slow motions at the same display scale factor.

In the information processing system 1, the display device 11, and the information processing device 21 according to the present embodiment, a plurality of slow images which are displayed in parallel include slow images of which the display scale factors of slow motions are different.

Accordingly, in the information processing system 1, the display device 11, and the information processing device 21 according to the present embodiment, it is possible to perform slow-time display in which two or more types of slow scale factors are mixed.

The slow scale factors of the slow images may be independent, that is, may be uneven.

In the information processing system 1, the display device 11, and the information processing device 21 according to the present embodiment, when the reference time arrives at the head of the time range assigned to each slow-time display area, reproduction of a slow image in the time range in the corresponding slow-time display area is started.

Accordingly, in the information processing system 1, the display device 11, and the information processing device 21 according to the present embodiment, reproduction of slow images in the slow-time display areas is repeatedly started. Accordingly, for example, a maximum value of the delay from the reference time decreases.

In this case, with attention paid to a predetermined peak (for example, an R peak in an electrocardiogram), for example, when a side (for example, the user 41) viewing the slow images causes a gaze to hop (moves the gaze) to a second slow-time display area after having viewed the predetermined peak in a first slow-time display area, the predetermined peak appears in the second slow-time display area. Then, when the gaze hops to a third slow-time display area, the predetermined peak appears in the third slow-time display area. In this way, it is possible to sequentially check the peak at the interested timing while causing the gaze to hop.

In the information processing system 1, the display device 11, and the information processing device 21 according to the present embodiment, when the reference time arrives at a starting point of a latest time range out of time ranges assigned to a plurality of slow-time display areas which are display in parallel or an arbitrary later timing, slow-time display in the plurality of slow-time display areas is simultaneously started.

Accordingly, in the information processing system 1, the display device 11, and the information processing device 21 according to the present embodiment, timings of events in slow images in the plurality of slow-time display areas are aligned. As a result, it is possible to easily compare a difference between slow images (a difference between events) in two or more slow-time display areas while viewing the slow images in the plurality of slow-time display areas.

In the information processing system 1, the display device 11, and the information processing device 21 according to the present embodiment, the time ranges are assigned such that there is a gap between neighboring time ranges.

Accordingly, in the information processing system 1, the display device 11, and the information processing device 21 according to the present embodiment, there may be a time period not covering any time range assigned by the time range assigning unit 112, and, for example, a non-signal section or a section with large noise cannot be assigned to any slow-time display area.

For example, when it is intended to observe 100 ms before and after a peak, a time width of 50 ms - peak - 50 ms is taken, and peak intervals randomly have 40 ms to 200 ms, a gap is generated in time periods before and after between peaks with a gap of 200 ms. In this case, the present configuration example may be applied.

For example, the present configuration example may be applied to repetitive reproduction with a gap such that reproducing a slow image corresponding to an image part of 1 second in the reference image, emptying an image part of 0.1 second in the reference image, and reproducing a slow image corresponding to an image part of 1 second in the reference image are repeated.

In the information processing system 1, the display device 11, and the information processing device 21 according to the present embodiment, the time ranges are assigned such that neighboring time ranges overlap.

Accordingly, in the information processing system 1, the display device 11, and the information processing device 21 according to the present embodiment, for example, when data of heartbeats is observed, there may be an overlapping part such that a second-half slow image of a heartbeat goes around to a first-half slow image of a next heartbeat.

For example, when it is intended to observe 100 ms before and after a peak, a time width of 50 ms - peak - 50 ms is taken, and peak intervals randomly have 40 ms to 200 ms, an overlapping part is generated in time periods before and after between peaks with a gap of 40 ms. In this case, the present configuration example may be applied.

For example, the present configuration example may be applied to repetitive reproduction with an overlapping part such that reproducing a slow image corresponding to an image part of 1 second in the reference image, going back by an image part of 0.1 second in the reference image, and reproducing a slow image corresponding to an image part of 1 second in the reference image are repeated.

In the information processing system 1, the display device 11, and the information processing device 21 according to the present embodiment, a time range which is actually assigned to slow-time display out of the time ranges assigned by the time range assigning unit 112 is selected through a manual operation of the user 41 or automatically.

Accordingly, in the information processing system 1, the display device 11, and the information processing device 21 according to the present embodiment, for example, when some slow images have only to be viewed, it is possible to select time ranges in which slow reproduction is performed.

In this way, for example, it is possible to select whether a slow image is to be displayed in the time range assigned in advance through manual selection or automatic selection.

In the information processing system 1, the display device 11, and the information processing device 21 according to the present embodiment, a mark indicating the newest is displayed in a slow-time display area in which the time of data currently displayed (for example, the real time or the time of recording) is the newest out of the slow-time display areas. Accordingly, in the information processing system 1, the display device 11, and the information processing device 21 according to the present embodiment, it is possible to easily understand in what slow-time display area a slow image of the newest time range is displayed.

In the information processing system 1, the display device 11, and the information processing device 21 according to the present embodiment, a mark indicating what time range out of a plurality of slow-time display areas is the time range under reproduction is displayed in the corresponding slow-time display area.

Accordingly, in the information processing system 1, the display device 11, and the information processing device 21 according to the present embodiment, it is possible to easily understand the order (sequence) of slow images which are displayed in a plurality of slow-time display areas.

In the information processing system 1, the display device 11, and the information processing device 21 according to the present embodiment, a mark indicating what time range from start of the whole reproduction is the time range under reproduction in the slow-time display unit is displayed in the corresponding slow-time display area.

Accordingly, in the information processing system 1, the display device 11, and the information processing device 21 according to the present embodiment, it is possible to easily understand the total order (total sequence) of slow images which are displayed in the slow-time display areas.

In the information processing system 1, the display device 11, and the information processing device 21 according to the present embodiment, a mark indicating what time in a time range under reproduction the currently displayed data corresponds to is displayed in the corresponding slow-time display area.

Accordingly, in the information processing system 1, the display device 11, and the information processing device 21 according to the present embodiment, it is possible to easily understand at what timing in the assigned time range a slow image is currently displayed, for example, using a bar graph. As a result, for example, it is possible to easily understand a timing (for example, the real time or the time of recording) of an event or a refresh timing of slow reproduction.

In the information processing system 1, the display device 11, and the information processing device 21 according to the present embodiment, a mark indicating information of the absolute time on data displayed therein or a mark indicating information of the relative time on data displayed therein is displayed in the predetermined display area in which the reference image is displayed and each of the plurality of slow-time display areas.

Accordingly, in the information processing system 1, the display device 11, and the information processing device 21 according to the present embodiment, it is possible to easily understand predetermined time information in display of the reference image or display of slow images.

Here, for example, a timing in the reference image may be used as the absolute time.

For example, when a marathon runner is observed, a timing (a relative timing) with respect to a start time of the marathon may be used as the relative time.

This time information may be referred to as, for example, a time stamp.

A program for realizing functions of arbitrary constituent units of the aforementioned arbitrary devices may be recorded on a computer-readable recording medium, and a computer system may be caused to read and execute the program. The "computer system" mentioned herein includes an operating system or hardware such as peripherals. The "computer-readable recording medium" is a portable medium such as a flexible disk, a magneto-optical disc, a ROM, or a compact disc-read only memory (CD-ROM) or a storage device such as a hard disk incorporated into a computer system. The "computer-readable recording medium" may include a medium that holds a program for a predetermined time such as a volatile memory in a computer system serving as a server or a client when the program is transmitted via a network such as the Internet or a communication line such as a telephone line. The volatile memory may be, for example, a random access memory (RAM). The recording medium may be, for example, a non-transitory recording medium.

The program may be transmitted from a computer system in which the program is stored in a storage device or the like to another computer system via a transmission medium or carrier waves in the transmission medium. Here, the "transmission medium" for transmitting a program is a medium having a function of transmitting information such as a network such as the Internet or a communication circuit line such as a telephone line.

The program may be a program for realizing some of the aforementioned functions. The program may be a so-called differential file that can realize the aforementioned functions in combination with another program stored in advance in the computer system. The differential file may be referred to as a differential program.

Functions of arbitrary constituent units of the aforementioned arbitrary devices may be realized by a processor. For example, the processes in the embodiment may be realized by a processor operating on the basis of information such as a program and a computer-readable recording medium storing information such as a program. Here, for example, the functions of the constituents of the processor may be realized by individual hardware, or the functions of the constituents may be realized by unified hardware. For example, the processor may include hardware, and the hardware may include at least one of a circuit for processing digital signals and a circuit for processing analog signals. For example, the processor may be constituted using one or both of one or more circuit devices and one or more circuit elements which are mounted on a circuit board. An integrated circuit (IC) may be used as a circuit device, and a resistor, a capacitor, or the like may be used as a circuit element.

Here, the processor may be, for example, a CPU. Here, the processor is not limited to a CPU, and various types of processors such as a graphics processing unit (GPU) and a digital signal processor (DSP) may be used. The processor may be, for example, a hardware circuit based on an application specific integrated circuit (ASIC). The processor may include, for example, a plurality of CPUs or may include hardware circuits based on a plurality of ASICs. For example, the processor may be constituted in combination of a plurality of CPUs and hardware circuits using a plurality of ASICs. The processor may include, for example, one or more of an amplification circuit and a filter circuit for processing analog signals.

While an embodiment of the present disclosure has been described above in detail with reference to the drawings, any specific configuration is not limited to this embodiment and includes designs or the like without departing from the gist of the present disclosure.

### [Remarks]

(Configuration Example 1) to (Configuration Example 26) will be described below.

### (Configuration Example 1)

An information processing device that outputs a plurality of slow-motion images (slow images) to a display unit configured to simultaneously display the plurality of slow-motion images in a plurality of slow-motion display areas (slow-time display areas) in parallel, the information processing device including:
a time range assigning unit configured to assign different time ranges to the slow-motion display areas;
a slow-motion data generating unit configured to generate slow-motion data (slow data) which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning unit; and
a display output unit configured to output the slow-motion images based on the slow-motion data generated by the slow-motion data generating unit to the display unit such that the slow-motion images are displayed in the slow-motion display areas.

In the present embodiment, the function of the slow-motion data generating unit is realized by the function of the slow-data generating and supply unit 113.

In the present embodiment, the function of the display output unit is realized by the function of the slow-time display processing unit 114 (the first to n-th slow-time display units A1 to An) and the function of the screen output unit 115.

In the present embodiment, data supplied by the data supply unit 12 is an example of the reference data.

For example, when the reference data is a video data, a parameter of time in the video data corresponds to the first parameter, and a parameter indicating an image (for example, a set of pixel values) in the video data corresponds to the second parameter.

For example, when the reference data is electrocardiogram data, a parameter of time in the electrocardiogram data corresponds to the first parameter, and a parameter indicating an image (for example, a set of electrode output values which represents an electrocardiogram map) in the electrocardiogram data corresponds to the second parameter.

For example, the reference data may be data including a parameter which is not time but corresponds to time (an example of the first parameter) and a parameter which changes with change of the parameter (an example of the second parameter). For example, when the first parameter indicates a quantity other than time, the change of the first parameter can be considered as change of time and displayed like a video.

The second parameter may include, for example, a single value or may include a multi-dimensional value.

### (Configuration Example 2)

The information processing device according to (Configuration Example 1), wherein the first parameter of the reference data is a parameter of time, and
a rate of change of the first parameter of the reference data is the same speed as the progress of real time.

### (Configuration Example 3)

The information processing device according to (Configuration Example 1), wherein the first parameter of the reference data is a parameter of time, and
a rate of change of the first parameter of the reference data is a speed different from the progress of real time.

### (Configuration Example 4)

The information processing device according to any one of (Configuration Example 1) to (Configuration Example 3), wherein the display unit additionally simultaneously displays a reference image based on the reference data in parallel with the slow-motion images in a reference display area, and
the display output unit outputs the reference image based on the reference data to the display unit such that the reference image is displayed in the reference display area.

### (Configuration Example 5)

The information processing device according to any one of (Configuration Example 1) to (Configuration Example 4), wherein the time range assigning unit assigns a different time range to one slow-motion display area after display of the time range assigned to the one slow-motion display area has ended.

### (Configuration Example 6)

The information processing device according to any one of (Configuration Example 1) to (Configuration Example 5), wherein starting points of the time ranges assigned to the slow-motion display areas by the time range assigning unit have a constant time interval.

### (Configuration Example 7)

The information processing device according to any one of (Configuration Example 1) to (Configuration Example 6), wherein the time ranges assigned to the slow-motion display areas by the time range assigning unit include a featured part of a repetitive event at a predetermined timing.

### (Configuration Example 8)

The information processing device according to any one of (Configuration Example 1) to (Configuration Example 7), wherein the time range assigning unit assigns the time ranges including a starting point based on an instruction from a user.

### (Configuration Example 9)

The information processing device according to (Configuration Example 8), wherein an ending point of the time range assigned to each slow-motion display area by the time range assigning unit is set to one of a timing based on the instruction from the user, a timing based on a predetermined time length, and a timing of a starting point of the earliest different time range which is later than the starting point of the time range.

### (Configuration Example 10)

The information processing device according to any one of (Configuration Example 1) to (Configuration Example 9), wherein display speed scale factors of the slow-motion images in the slow-motion display areas are the same.

### (Configuration Example 11)

The information processing device according to any one of (Configuration Example 1) to (Configuration Example 9), wherein at least one of display speed scale factors of the slow-motion images in the slow-motion display areas is different.

### (Configuration Example 12)

The information processing device according to any one of (Configuration Example 1) to (Configuration Example 11), wherein display of the slow-motion image of the time range in each slow-motion display area starts when the first parameter arrives at a starting point of the time range assigned to each slow-motion display area.

### (Configuration Example 13)

The information processing device according to any one of (Configuration Example 1) to (Configuration Example 11), wherein display of the slow-motion images of the time ranges in the plurality of slow-motion display areas in which display is simultaneously performed in parallel starts simultaneously when the first parameter arrives at the starting point of the time range in the slow-motion display area to which the latest starting point of the time range is assigned out of the plurality of slow-motion display areas or a predetermined time point thereafter.

### (Configuration Example 14)

The information processing device according to any one of (Configuration Example 1) to (Configuration Example 13), wherein the time range assigning unit assigns the time ranges in which there is a gap between the neighboring time ranges.

### (Configuration Example 15)

The information processing device according to any one of (Configuration Example 1) to (Configuration Example 13), wherein the time range assigning unit assigns the time ranges in which there is an overlapping part between the neighboring time ranges.

### (Configuration Example 16)

The information processing device according to any one of (Configuration Example 1) to (Configuration Example 15), further including a selection unit configured to manually or automatically select the time range in which display of the slow-motion image is performed out of the time ranges assigned by the time range assigning unit.

In the present embodiment, regarding an automatic selection unit, the function of the selection unit is realized by the function of the process control unit 13 1.

In the present embodiment, regarding a manual selection unit operated by a user 41, the function of the selection unit is realized by the function of the operation unit 141 and the function of the process control unit 131.

### (Configuration Example 17)

The information processing device according to any one of (Configuration Example 1) to (Configuration Example 16), wherein first information is displayed in the slow-motion display area in which the slow-motion image displayed in the slow-motion display area is the newest out of the plurality of slow-motion display areas.

Here, the newest slow-motion image means the newest in case of a parameter of time (that is, the slow-motion image in which the time has progressed most).

In the present embodiment (the modified example), information of the mark 2011 illustrated in FIG. 7A is an example of the first information.

### (Configuration Example 18)

The information processing device according to any one of (Configuration Example 1) to (Configuration Example 17), wherein second information which is a number in the order of from the newest to the oldest of the slow-motion images displayed in the slow-motion display areas or a number in the reverse order thereof is displayed in the slow-motion display areas.

Here, the newest slow-motion image means the newest in case of a parameter of time (that is, the slow-motion image in which the time has progressed most), and the oldest slow-motion image means the oldest in case of a parameter of time (that is, the slow-motion image in which the time is the earliest).

In the present embodiment (the modified example), information of the marks 2111 to 2113 illustrated in FIG. 7B is an example of the second information.

### (Configuration Example 19)

The information processing device according to any one of (Configuration Example 1) to (Configuration Example 18), wherein third information which is a total number in the order of from the newest to the oldest of the slow-motion images displayed in the slow-motion display areas or a total number in the reverse order thereof is displayed in the slow-motion display areas.

In the present embodiment (the modified example), information of the marks 2211 to 2213 illustrated in FIG. 7C is an example of the second information.

### (Configuration Example 20)

The information processing device according to any one of (Configuration Example 1) to (Configuration Example 19), wherein fourth information indicating a position of the slow-motion image on display in the time range assigned to each slow-motion display area is displayed in the slow-motion display area.

In the present embodiment (the modified example), information of the time range B111 and the position P1 illustrated in FIG. 7D is an example of the fourth information.

### (Configuration Example 21)

The information processing device according to (Configuration Example 4), wherein one or both of fifth information indicating an absolute time corresponding to the first parameter of the reference data and sixth information indicating a relative time to the absolute time are displayed in at least one of the slow-motion display areas and the reference display area.

In the present embodiment (the modified example), the time information 2511 illustrated in FIG. 7E is an example of the fifth information, and the time information 2512 illustrated in FIG. 7E is an example of the sixth information.

### (Configuration Example 22)

The information processing device according to any one of (Configuration Example 1) to (Configuration Example 21), further including a data supply unit configured to supply the reference data.

### (Configuration Example 23)

The information processing device according to (Configuration Example 4), wherein a time delay of the newest slow-motion image on display with respect to the time corresponding to the reference image on display is kept a predetermined value or less.

According to the present embodiment, it is also possible to provide a display device.

### (Configuration Example 24)

A display device including:
the information processing device according to any one of (Configuration Example 1) to (Configuration Example 23); and
the display unit.

According to the present embodiment, it is also possible to provide an information processing method that is performed in the information processing device (or the display device).

### (Configuration Example 25)

An information processing method of outputting a plurality of slow-motion images to a display unit configured to simultaneously display the plurality of slow-motion images in a plurality of slow-motion display areas in parallel, the information processing method including:
causing a time range assigning unit to assign different time ranges to the slow-motion display areas;
causing a slow-motion data generating unit to generate slow-motion data which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning unit; and
causing a display output unit to output the slow-motion images based on the slow-motion data generated by the slow-motion data generating unit to the display unit such that the slow-motion images are displayed in the slow-motion display areas.

According to the present embodiment, it is also possible to provide a program (a computer program) that is executed in a computer constituting the information processing device (or the display device).

### (Configuration Example 26)

A program causing a computer to realize: the computer outputting a plurality of slow-motion images to a display unit configured to simultaneously display the plurality of slow-motion images in a plurality of slow-motion display areas in parallel,
a time range assigning function of assigning different time ranges to the slow-motion display areas;
a slow-motion data generating function of generating slow-motion data which is a slow motion associated with a first parameter which is a parameter of time or corresponds to time with respect to reference data in which a second parameter varies with change of the first parameter for each of the slow-motion display areas on the basis of a result of assignment of the time ranges in the time range assigning function; and
a display output function of outputting the slow-motion images based on the slow-motion data generated by the slow-motion data generating function to the display unit such that the slow-motion images are displayed in the slow-motion display areas.

While preferred embodiments of the invention have been described and illustrated above, it should be understood that these are exemplary examples of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### EXPLANATION OF REFERENCES

1 Information processing system
11 Display device
12 Data supply unit
21 Information processing device
22 Display unit
31 Input unit
32 Output unit
33 Communication unit
34 Storage unit
35 Control unit
41 User
111 Reference time image display unit
112 Time range assigning unit
113 Slow data generating and supply unit
114 Slow-time display processing unit
115 Screen output unit
131 Process control unit
141 Operation unit
161 Screen unit
181 Data observing unit
182 Data storage unit
1011 Waveform
1021 Real-time electrocardiogram image
1022 Slow electrocardiogram image
2011, 2111 to 2113, 2211 to 2213 Mark
2511 to 2512 Time information
A1 to An First slow-time display unit to n-th slow-time display unit
B1 to B3, B11 to B14, Bill Time range
C1 to C3, C11 to C14 Time
D1 to D3, D11 to D13 Waveform part
Ge1 to Ge7, Ge111 to Ge112 Real-time image
Gs1 to Gs7, Gs21 to Gs25, Gs41 to Gs43, Gs111, Gs121, Gs131 Slow image
P1 Position
Re1 Real-time display area
Rs1 First slow-time display area
Rs2 Second slow-time display area
Rs3 Third slow-time display area
V1 Reference image group
W1 Slow image group

## Claims

1. An information processing device that outputs a plurality of slow-motion images to a display unit configured to simultaneously display the plurality of slow-motion images in a plurality of slow-motion display areas in parallel, the information processing device comprising:
a time range assigning unit configured to assign different time ranges to the slow-motion display areas;
a slow-motion data generating unit configured to generate slow-motion data which is a slow motion associated with a first parameter which is a parameter of time or corresponds to time with respect to reference data in which a second parameter varies with change of the first parameter for each of the slow-motion display areas on a basis of a result of assignment of the time ranges in the time range assigning unit; and
a display output unit configured to output the slow-motion images based on the slow-motion data generated by the slow-motion data generating unit to the display unit such that the slow-motion images are displayed in the slow-motion display areas.

2. The information processing device according to claim 1, wherein the first parameter of the reference data is a parameter of time, and
wherein a rate of change of the first parameter of the reference data is the same speed as the progress of real time.

3. The information processing device according to claim 1, wherein the first parameter of the reference data is a parameter of time, and
wherein a rate of change of the first parameter of the reference data is a speed different from the progress of real time.

4. The information processing device according to any one of claims 1 to 3, wherein the display unit additionally simultaneously displays a reference image based on the reference data in parallel with the slow-motion images in a reference display area, and
wherein the display output unit outputs the reference image based on the reference data to the display unit such that the reference image is displayed in the reference display area.

5. The information processing device according to any one of claims 1 to 4, wherein the time range assigning unit assigns a different time range to one slow-motion display area after display of the time range assigned to the one slow-motion display area has ended.

6. The information processing device according to any one of claims 1 to 5, wherein starting points of the time ranges assigned to the slow-motion display areas by the time range assigning unit have a constant time interval.

7. The information processing device according to any one of claims 1 to 6, wherein the time ranges assigned to the slow-motion display areas by the time range assigning unit include a featured part of a repetitive event at a predetermined timing.

8. The information processing device according to any one of claims 1 to 7, wherein the time range assigning unit assigns the time ranges including a starting point based on an instruction from a user.

9. The information processing device according to claim 8, wherein an ending point of the time range assigned to each slow-motion display area by the time range assigning unit is set to one of a timing based on the instruction from the user, a timing based on a predetermined time length, and a timing of a starting point of the earliest different time range which is later than the starting point of the time range.

10. The information processing device according to any one of claims 1 to 9, wherein display speed scale factors of the slow-motion images in the slow-motion display areas are the same.

11. The information processing device according to any one of claims 1 to 9, wherein at least one of display speed scale factors of the slow-motion images in the slow-motion display areas is different.

12. The information processing device according to any one of claims 1 to 11, wherein display of the slow-motion image of the time range in each slow-motion display area starts when the first parameter arrives at a starting point of the time range assigned to each slow-motion display area.

13. The information processing device according to any one of claims 1 to 11, wherein display of the slow-motion images of the time ranges in the plurality of slow-motion display areas in which display is simultaneously performed in parallel starts simultaneously when the first parameter arrives at the starting point of the time range in the slow-motion display area to which the latest starting point of the time range is assigned out of the plurality of slow-motion display areas or a predetermined time point thereafter.

14. The information processing device according to any one of claims 1 to 13, wherein the time range assigning unit assigns the time ranges in which there is a gap between the neighboring time ranges.

15. The information processing device according to any one of claims 1 to 13, wherein the time range assigning unit assigns the time ranges in which there is an overlapping part between the neighboring time ranges.

16. The information processing device according to any one of claims 1 to 15, further comprising a selection unit configured to manually or automatically select the time range in which display of the slow-motion image is performed out of the time ranges assigned by the time range assigning unit.

17. The information processing device according to any one of claims 1 to 16, wherein first information is displayed in the slow-motion display area in which the slow-motion image displayed in the slow-motion display area is the newest out of the plurality of slow-motion display areas.

18. The information processing device according to any one of claims 1 to 17, wherein second information which is a number in the order of from the newest to the oldest of the slow-motion images displayed in the slow-motion display areas or a number in the reverse order thereof is displayed in the slow-motion display areas.

19. The information processing device according to any one of claims 1 to 18, wherein third information which is a total number in the order of from the newest to the oldest of the slow-motion images displayed in the slow-motion display areas or a total number in the reverse order thereof is displayed in the slow-motion display areas.

20. The information processing device according to any one of claims 1 to 19, wherein fourth information indicating a position of the slow-motion image on display in the time range assigned to each slow-motion display area is displayed in the slow-motion display area.

21. The information processing device according to claim 4, wherein one or both of fifth information indicating an absolute time corresponding to the first parameter of the reference data and sixth information indicating a relative time to the absolute time are displayed in at least one of the slow-motion display areas and the reference display area.

22. The information processing device according to any one of claims 1 to 21, further comprising a data supply unit configured to supply the reference data.

23. The information processing device according to claim 4, wherein a time delay of the newest slow-motion image on display with respect to the time corresponding to the reference image on display is kept a predetermined value or less.

24. A display device comprising:
the information processing device according to any one of claims 1 to 23; and
the display unit.

25. An information processing method of outputting a plurality of slow-motion images to a display unit configured to simultaneously display the plurality of slow-motion images in a plurality of slow-motion display areas in parallel, the information processing method comprising:
causing a time range assigning unit to assign different time ranges to the slow-motion display areas;
causing a slow-motion data generating unit to generate slow-motion data which is a slow motion associated with a first parameter which is a parameter of time or corresponds to time with respect to reference data in which a second parameter varies with change of the first parameter for each of the slow-motion display areas on a basis of a result of assignment of the time ranges in the time range assigning unit; and
causing a display output unit to output the slow-motion images based on the slow-motion data generated by the slow-motion data generating unit to the display unit such that the slow-motion images are displayed in the slow-motion display areas.

26. A program causing a computer to realize: the computer outputting a plurality of slow-motion images to a display unit configured to simultaneously display the plurality of slow-motion images in a plurality of slow-motion display areas in parallel,
a time range assigning function of assigning different time ranges to the slow-motion display areas;
a slow-motion data generating function of generating slow-motion data which is a slow motion associated with a first parameter which is a parameter of time or corresponds to time with respect to reference data in which a second parameter varies with change of the first parameter for each of the slow-motion display areas on a basis of a result of assignment of the time ranges in the time range assigning function; and
a display output function of outputting the slow-motion images based on the slow-motion data generated by the slow-motion data generating function to the display unit such that the slow-motion images are displayed in the slow-motion display areas.
